# EUROPEAN PATENT APPLICATION

(11) **EP 4 716 106 A1**
(43) Date of publication of application: **25.03.2026**
(21) Application number: 23937067.9
(22) Date of filing: 18.05.2023
(51) Int. Cl.: H04B 7/0417

(54) **METHOD FOR EVALUATING CSI FEEDBACK PERFORMANCE, NETWORK DEVICE, AND TERMINAL DEVICE**

(71) Applicant: GUANGDONG OPPO MOBILE TELECOMMUNICATIONS CORP., LTD., Dongguan, Guangdong 523860 (CN)
(72) Inventor: ZHENG, Xufei, Dongguan, Guangdong 523860 (CN)
(74) Representative: Taor, Simon Edward William
(86) International application number: PCT/CN2023/095152
(87) International publication number: WO 2024/234387

(57) **Abstract**

The present disclosure relates to a method for evaluating channel state information (CSI) feedback performance, a network device, a terminal device, a chip, a computer-readable storage medium, a computer program product, a computer program, and a communication system. The network device processes a first CSI based on a first encoder to obtain a first CSI feedback information. The first CSI is obtained by the network device processing a second CSI feedback information from the terminal device based on a first decoder. The second CSI feedback information is obtained by the terminal device processing a second CSI based on the first encoder, and the second CSI is obtained based on reference signal measurement. The network device evaluates CSI feedback performance based on the first CSI feedback information. The present disclosure can accurately evaluate the CSI feedback performance without introducing significant transmission overhead.

## Description

### TECHNICAL FIELD

This disclosure relates to the field of communication, and specifically to a method for evaluating channel state information (CSI) feedback performance, a network device, a terminal device, a chip, a computer-readable storage medium, a computer program product, a computer program, and a communication system.

### BACKGROUND

Multiple-in multiple-out (MIMO) technology plays an important role in long term evolution (LTE) and new radio (NR) systems, and will remain one of the key enabling technologies in future next-generation wireless communication systems. The signal transmission performance of MIMO largely depends on the accuracy of channel state information (CSI) that the transmitter acquires.

The use of auto-encoder models to achieve high-accuracy CSI feedback in frequency-division duplex (FDD) mode has received extensive attention in academia in recent years and has begun to be studied and discussed in wireless standardization organizations. In such methods, a user equipment (UE) can use a pre-trained neural network encoder to convert the acquired CSI into indication information (bitmap) that can be fed back through an uplink channel. After receiving the indication information, a network device can use a corresponding pre-trained neural network decoder to recover the CSI from the indication information. The closer the CSI recovered by the network device is to the CSI acquired by the UE, the better the performance of the neural network model. However, since the CSI recovered by the network device is at the base station side and the CSI acquired by the UE is at the UE side, comparison cannot be performed directly. There is a need to consider how to evaluate CSI feedback performance without introducing significant transmission overhead.

### SUMMARY

Embodiments of the present disclosure provide a method for evaluating channel state information (CSI) feedback performance. The method includes the following.
A network device processes a first CSI based on a first encoder to obtain first CSI feedback information. The first CSI is obtained by the network device processing second CSI feedback information from a terminal device based on a first decoder. The second CSI feedback information is obtained by the terminal device processing a second CSI based on the first encoder, and the second CSI is obtained based on reference signal measurement. The network device evaluates CSI feedback performance based on the first CSI feedback information.

Embodiments of the present disclosure provide a method for evaluating CSI feedback performance. The method includes the following. A terminal device processes a second CSI based on a first encoder to obtain second CSI feedback information, where the second CSI is obtained based on reference signal measurement. The terminal device sends the second CSI feedback information to a network device, where the second CSI feedback information is used for the network device to obtain a first CSI based on a first decoder. After processing the first CSI based on the first encoder to obtain first CSI feedback information, the network device evaluates CSI feedback performance based on the first CSI feedback information.

Embodiments of the present disclosure provide a network device. The network device includes a first processing module configured to process first CSI based on a first encoder to obtain first CSI feedback information. The first CSI is obtained through processing, based on a first decoder, second CSI feedback information received from a terminal device. The second CSI feedback information is obtained by the terminal device processing the second CSI based on the first encoder, and the second CSI is obtained based on reference signal measurement. The first processing module is further configured to evaluate CSI feedback performance based on the first CSI feedback information.

Embodiments of the present disclosure provide a terminal device. The terminal device includes a second processing module and a seventh communication module. The second processing module is configured to process a second CSI based on a first encoder to obtain second CSI feedback information, where the second CSI is obtained based on reference signal measurement. The seventh communication module is configured to send the second CSI feedback information to a network device, where the second CSI feedback information is used for the network device to obtain first CSI based on a first decoder and to evaluate CSI feedback performance based on the first CSI feedback information.

Embodiments of the present disclosure provide a network device. The network device includes a processor and a memory. The memory is configured to store computer programs. The processor is configured to invoke and execute the computer programs stored in the memory to cause the network device to execute the above method for evaluating CSI feedback performance.

Embodiments of the present disclosure provide a terminal device. The terminal device includes a processor and a memory. The memory is configured to store computer programs. The processor is configured to invoke and execute the computer programs stored in the memory to cause the terminal device to execute the above method for evaluating CSI feedback performance.

Embodiments of the present disclosure provide a chip. The chip is used for implementing the above method for evaluating CSI feedback performance.

Specifically, the chip includes a processor. The processor is configured to invoke and execute computer programs from a memory, so that a device installed with the chip executes the above method for evaluating CSI feedback performance.

Embodiments of the present disclosure provide a computer-readable storage medium configured to store a computer program. When run by the device, the computer program causes a device to perform the above method for evaluating CSI feedback performance.

Embodiments of the present disclosure provide a computer program product including computer program instructions which are operable with a computer to perform the above method for evaluating CSI feedback performance.

Embodiments of the present disclosure provide a computer program which, when executed by a computer, cause the computer to perform the above method for evaluating CSI feedback performance.

In embodiments of the disclosure, the first encoder is configured in the network device. The network device completes at least one decoding and encoding process on the received second CSI, and evaluates CSI feedback performance based on information generated from the complete decoding and encoding process. Since the evaluation is directly performed based on relevant information from the encoder and decoder, rather than indirectly through system transmission performance, high accuracy is achieved. In addition, since there is no need for the network device and the terminal device to transmit CSI during each performance evaluation, transmission overhead can be effectively controlled. Furthermore, the terminal device does not need to consume excessive computational power and power consumption for model performance evaluation, thus avoiding increased capability requirements on the terminal device.

### BRIEF DESCRIPTION OF THE DRAWINGS

FIG. 1 is a schematic diagram of a communication system according to embodiments of the disclosure.
FIG. 2 is a schematic diagram of a basic process for channel state information (CSI) acquisition in frequency-division duplex.
FIG. 3 is a basic architecture diagram of a CSI feedback method based on an auto-encoder model.
FIG. 4 is a schematic flowchart of a method for evaluating CSI feedback performance according to an embodiment of the disclosure.
FIG. 5 is a schematic flowchart of a method for evaluating CSI feedback performance according to another embodiment of the disclosure.
FIG. 6 is a schematic flowchart of a method for evaluating CSI feedback performance according to yet another embodiment of the disclosure.
FIG. 7 is a schematic flowchart of a method for evaluating CSI feedback performance according to a further embodiment of the disclosure.
FIG. 8 is a schematic diagram of manner 1 for triggering performance monitoring of a CSI feedback model in application example 1 of the disclosure.
FIG. 9 is a schematic diagram of manner 2 for triggering performance monitoring of a CSI feedback model in application example 1 of the disclosure.
FIG. 10 is a schematic diagram illustrating implementing performance monitoring of a CSI feedback model in application example 1 of the disclosure.
FIG. 11 is a schematic diagram of processing manner 1 based on a performance monitoring result in application example 1 of the disclosure.
FIG. 12 is a schematic diagram of processing manner 2 based on a performance monitoring result in application example 1 of the disclosure.
FIG. 13 is a schematic diagram of manner 1 for triggering performance monitoring of a CSI feedback model in application example 2 of the disclosure.
FIG. 14 is a schematic diagram of manner 2 for triggering performance monitoring of a CSI feedback model in application example 2 of the disclosure.
FIG. 15A is a schematic diagram of manner 1 for implementing performance monitoring of a CSI feedback model in application example 2 of the disclosure.
FIG. 15B is a schematic diagram of manner 2 for implementing performance monitoring of a CSI feedback model in application example 2 of the disclosure.
FIG. 16 is a schematic block diagram of a network device according to an embodiment of the disclosure.
FIG. 17 is a schematic block diagram of a network device according to another embodiment of the disclosure.
FIG. 18 is a schematic block diagram of a network device according to another embodiment of the disclosure.
FIG. 19 is a schematic block diagram of a network device according to another embodiment of the disclosure.
FIG. 20 is a schematic block diagram of a network device according to another embodiment of the disclosure.
FIG. 21 is a schematic block diagram of a network device according to another embodiment of the disclosure.
FIG. 22 is a schematic block diagram of a network device according to another embodiment of the disclosure.
FIG. 23 is a schematic block diagram of a terminal device according to an embodiment of the disclosure.
FIG. 24 is a schematic block diagram of a communication device according to embodiments of the disclosure.
FIG. 25 is a schematic block diagram of a chip according to embodiments of the disclosure.
FIG. 26 is a schematic block diagram of a communication system according to embodiments of the disclosure.

### DETAILED DESCRIPTION

The following will describe technical solutions of embodiments of the disclosure with reference to the accompanying drawings in embodiments of the disclosure.

The technical solutions in embodiments of the disclosure are applicable to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a 5^{th} generation (5G) system, or other communication systems.

Generally speaking, a conventional communication system generally supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, or vehicle to everything (V2X) communication, etc. Embodiments of the disclosure can also be applied to these communication systems.

In an embodiment, a communication system in embodiments of the disclosure may be applied to a carrier aggregation (CA) scenario, a dual connectivity (DC) scenario, or a standalone (SA) network deployment scenario.

In an embodiment, the communication system in implementations of the disclosure is applicable to an unlicensed spectrum, and an unlicensed spectrum may be regarded as a shared spectrum. Or the communication system in embodiments of the disclosure is applicable to a licensed spectrum, and a licensed spectrum may be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc.

The terminal device may be a station (ST) in a WLAN, a cellular radio telephone, a cordless telephone, a session initiation protocol (SIP) telephone, a wireless local loop (WLL) station, a personal digital assistant (PDA), a handheld device with wireless communication functions, a computing device, other processing devices coupled with a wireless modem, an in-vehicle device, a wearable device, and a terminal device in a next-generation communication system, for example, a terminal device in an NR network, or a terminal device in a future evolved public land mobile network (PLMN), etc.

In embodiments of the disclosure, the terminal device can be deployed on land, which includes indoor or outdoor, handheld, wearable, or in-vehicle. The terminal device can also be deployed on water (such as ships, etc.). The terminal device can also be deployed in the air (such as airplanes, balloons, satellites, etc.).

In embodiments of the disclosure, the terminal device can be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, etc.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in a WLAN, a base transceiver station (BTS) in GSM or CDMA, may also be a Node B (NB) in WCDMA, and may also be an evolutional Node B (eNB or eNodeB) in LTE, or a relay station or AP, or an in-vehicle device, a wearable device, a network device (gNB) in an NR network, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device provides services for a cell, and the terminal device communicates with the network device on a transmission resource (for example, a frequency-domain resource or a spectrum resource) for the cell. The cell may be a cell corresponding to the network device (for example, a base station). The cell may correspond to a macro base station, or may correspond to a base station corresponding to a small cell. The small cell may include: a metro cell, a micro cell, a pico cell, a femto cell, and the like. These small cells are characterized by small coverage and low transmission power and are adapted to provide data transmission service with high-rate.

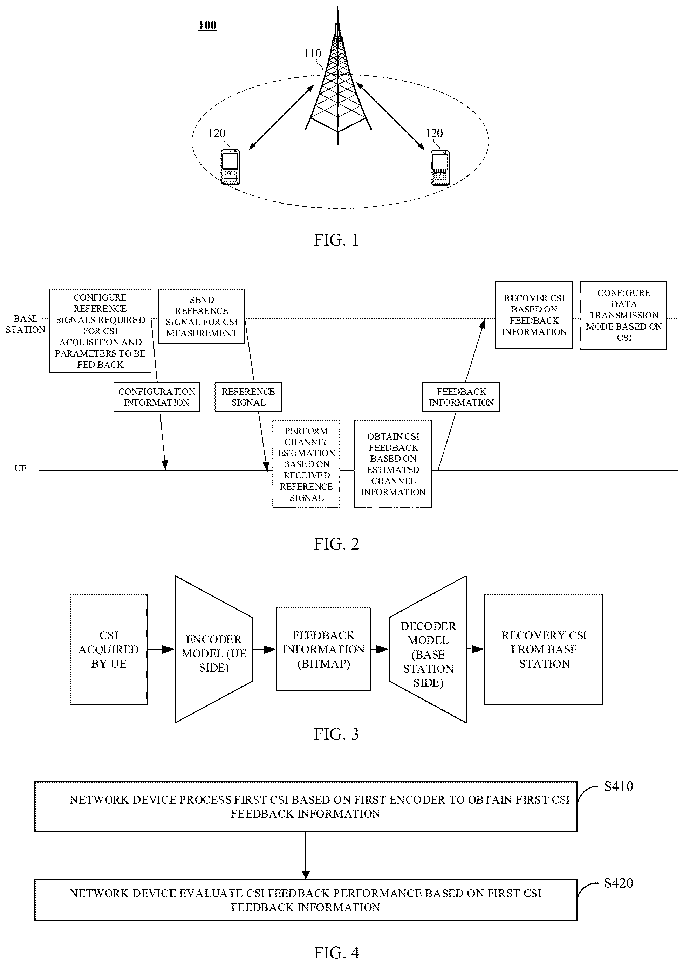

FIG. 1 exemplarily illustrates a communication system 100. The communication system includes one network device 110 and two terminal devices 120. In a possible implementation, the communication system 100 may include multiple network devices 110, and the coverage area of each network device 110 may include other numbers of terminal devices 120. Embodiments of the disclosure are not limited in this regard.

In a possible implementation, the communication system 100 may further include other network entities such as a mobility management entity (MME) and an access and mobility management function (AMF). Embodiments of the disclosure are not limited in this regard.

The network device may include an access-network device and a core-network device, that is, the wireless communication system further includes multiple core-networks for communicating with the access-network device. The access-network device may be an evolutional node B (eNB or e-NodeB), a macro base station, a micro base station (also referred to as a "small base station"), a pico base station, an access point (AP), a transmission point (TP), or a new generation Node B (gNodeB) in a long-term evolution (LTE) system, a next radio (NR) system, or an authorized auxiliary access long-term evolution (LAA-LTE) system, etc.

It should be understood that, a device with communication functions in a network or system in embodiments of the disclosure may be referred to as a communication device. For example, as illustrated in FIG. 1, the communication device may include a network device and a terminal device with communication functions. The network device and the terminal device may be the specific devices in embodiments of the disclosure, which will not be repeated herein. The communication device may further include other devices in the communication system, such as a network controller, a mobility management entity, or other network entities. Embodiments of the disclosure are not limited in this regard.

For ease of understanding of embodiments of the disclosure, the following briefly describes the basic processes and basic concepts involved in embodiments of the disclosure. It should be understood that the basic processes and basic concepts described below do not limit embodiments of the disclosure.

It should be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It should be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that that there is an association relationship between A and B.

In the elaboration of embodiments of the disclosure, the term "correspondence" may mean that there is a direct or indirect correspondence between the two, may mean that there is an association between the two, or may mean a relationship of indicating and indicated or configuring and configured, etc.

In order for better understanding of technical solutions of embodiments of the disclosure, technologies related to the embodiments of the disclosure will be elaborated below. The following related art as an optional scheme can be arbitrarily combined with the technical solutions of embodiments of the disclosure, which shall all belong to the protection scope of embodiments of the disclosure.

### 1. Channel state information (CSI) feedback mechanism in cellular communication system

In a cellular communication system, the specific manner for a network device (such as a base station) to acquire CSI varies depending on the duplex communication mode adopted. Specifically, in time-division duplex (TDD) mode, since both uplink and downlink operate on the same frequency, the base station can utilize channel reciprocity between the uplink and downlink to acquire CSI, that is, the base station can directly estimate the CSI used for guiding downlink data transmission based on an uplink reference signal (RS) sent by the UE. The uplink RS can be, for example, a sounding reference signal (SRS). In contrast, in frequency-division duplex (FDD) mode, since the uplink and downlink operate on different frequencies, the base station cannot directly estimate downlink CSI based on the uplink RS using channel reciprocity, and thus the acquisition of CSI is much more complex. First, the base station configures and sends some RSs for the UE to perform CSI measurement, such as a synchronization signal block (SSB) or a channel-state information reference signal (CSI-RS). After that, the UE completes channel estimation by measuring the above RSs and feeds back CSI information to the base station, so that the base station can configure a reasonable and efficient data transmission mode based on the current channel condition.

In the NR system, to enable the UE to feed CSI back to the base station, multiple sets of codebooks are defined in a standardized manner, such as Type 1, Type 2, and enhanced Type 2 codebooks. The UE finds from the codebook a codeword matching the best with the CSI to be fed back, and feeds back a corresponding index to the base station through the uplink. The base station can recover the CSI through the index based on the same codebook. The basic flow of CSI acquisition in FDD is specifically illustrated in the in FIG. 2.

### 2. Auto-encoder model

An auto-encoder is a type of artificial neural network model. The auto-encoder functions to learn implicit features of input data, which is called encoding, and to reconstruct the original input data using the learned new features, which is called decoding. More intuitively, the auto-encoder is usually composed of a pair of encoder and decoder. The encoder compresses the input information to obtain robust and concise compressed information. The decoder reconstructs the input information as accurately as possible based on this compressed information.

The optimization and training process of the auto-encoder is actually to make the output of the decoder model as consistent as possible with the input of the encoder model under the constraint of the size of the compressed information. Unlike traditional solutions, the compressed information output by the encoder model has no explicit meaning and is difficult to be interpreted by means other than the decoder model.

### 3. CSI feedback method based on artificial intelligence (AI) technology

In related technologies, it is proposed to use an auto-encoder model to achieve high-accuracy CSI feedback in FDD mode. FIG. 3 illustrates a basic architecture diagram of the CSI feedback method based on the auto-encoder model. The UE can use a pre-trained neural network encoder to convert the acquired CSI information into indication information (also referred to as CSI feedback information, which can specifically be a bitmap) that can be fed back through the uplink channel. After receiving the indication information, the base station can use a corresponding trained neural network decoder to reconstruct the CSI information from the indication information. The closer the CSI recovered by the base station is to the CSI acquired by the UE, the better the performance of the neural network model.

For the traditional CSI feedback method in FDD mode, current wireless communication systems basically complete the process by constructing sufficiently detailed codebooks through theoretical modeling of actual communication environments. However, as requirements for flexibility, adaptability, and system capacity of wireless communication systems further increase, the benefits of designing and optimizing wireless communication system based on classical mathematical model theories is gradually diminishing. It is necessary to adopt new ideas and manners, such as data-driven AI technologies, combined with traditional theories and system design manners, to break through the original bottlenecks and further improve the performance of wireless systems.

The AI-based CSI feedback manner, by utilizing the powerful non-linear fitting, compression, and recovery capabilities of neural networks, has higher feedback accuracy and lower feedback overhead compared with traditional CSI acquisition methods. However, since AI-based CSI feedback is essentially a data-driven black-box technology, its generalization and interpretability are not as good as traditional methods. Specifically, AI models achieve good performance in familiar scenarios (i.e., scenarios encountered or similar to those in the training phase), but cannot guarantee performance in unfamiliar scenarios, and even has a significantly lower feedback accuracy than the traditional methods. Therefore, monitoring and evaluation of feedback performance are particularly important for AI model-based CSI feedback methods.

Due to the particularity of the CSI feedback problem, the most direct manner to evaluate feedback performance is to compare the feedback CSI and the ideal CSI. However, since the two CSI are at the base station and UE sides respectively, the comparison cannot be performed directly. In related technologies, two types of methods are provided.

Monitoring through intermediate KPI: for example, using metrics such as cosine similarity and normalized mean square error between the CSI recovered through feedback and the ideal CSI. The advantage of this type of method is accurate and intuitive monitoring of the performance of the CSI feedback model, but it comes with high costs. If the base station performs performance monitoring, the UE needs to upload the ideal CSI required for each monitoring to the base station as losslessly as possible, which will occupy a large amount of uplink transmission resources and cause delay for each monitoring. If the UE side performs performance monitoring, the base station needs to deliver the feedback CSI itself or the decoder model to the UE in some way. The former will incur consumption of downlink transmission resources and cause delay for each monitoring, and the latter, because the complexity of the decoder model is much higher than that of the encoder model, imposes higher requirements on the capability of the UE and will result in higher power consumption.

Monitoring through eventual KPI: such as data transmission rate, packet reception success rate, etc. One disadvantage of this type of method is large hysteresis, which makes it impossible to timely detect performance problems of the CSI feedback model, thereby damaging network communication performance. Another disadvantage is difficulty in locating a problem, since there are many potential factors affecting indirect communication metrics, and the performance degradation of the CSI feedback model is only one of them. If the cause is misidentified, even updating or replacing the CSI feedback model, or falling back to traditional scheme will not help.

The technical solutions of embodiments of the disclosure are mainly intended to solve at least one of the above technical problems.

FIG. 4 is a schematic flowchart of a method for evaluating CSI feedback performance according to an embodiment of the disclosure. The method can optionally be applied to the system illustrated in FIG. 1, but is not limited thereto. The method includes at least part of the following.

S410, a network device processes a first CSI based on a first encoder to obtain first CSI feedback information. The first CSI is obtained by the network device processing second CSI feedback information from a terminal device based on a first decoder. The second CSI feedback information is obtained by the terminal device processing a second CSI based on the first encoder, and the second CSI is obtained based on reference signal measurement. That is, the first encoder is used in the terminal device to process the second CSI to obtain the second CSI feedback information.

S420, the network device evaluates CSI feedback performance based on the first CSI feedback information.

In practical applications, the first encoder and the first decoder form an auto-encoder model. The first encoder may be deployed in the terminal device. After the terminal device obtains a CSI based on reference signal measurement, the terminal device may encode the CSI using the first encoder to obtain CSI feedback information. The first decoder may be deployed in the network device and used for the network device to decode the CSI feedback information sent by the terminal device, so as to recover the corresponding CSI. According to embodiments of the disclosure, the network device further includes the first encoder. The first encoder in the network device may be pre-configured or determined based on information related to the first encoder reported by the terminal device.

In embodiments of the disclosure, the second CSI is a CSI obtained by the terminal device based on reference signal measurement. Exemplarily, the reference signal may include an SSB, a CSI-RS, or other RS, that is, the second CSI may be a CSI determined by the terminal device through measuring the SSB, the CSI-RS, or other RS.

In embodiments of the disclosure, the second CSI feedback information is obtained by the terminal device processing the second CSI based on the first encoder, that is, the second CSI feedback information is an encoding result of the second CSI. Optionally, the second CSI feedback information is a bitmap (also referred to as bit map). In practical applications, the terminal device may send the second CSI feedback information to the network device. It can be understood that the second CSI feedback information is indication information for feeding back the second CSI and is used to enable the network device to learn the current channel condition and configure a reasonable and efficient data transmission mode.

In embodiments of the disclosure, the first CSI is obtained by the network device processing the second CSI feedback information based on the first decoder, that is, the first CSI is a decoding result of the second CSI feedback information. It can be understood that the first CSI and the second CSI have the same data structure, and the better the CSI feedback performance (i.e., the better the performance of the auto-encoder model), the closer the first CSI is to the second CSI. In practical applications, the network device may configure a data transmission mode based on the decoded first CSI.

In embodiments of the disclosure, the network device processes the first CSI based on the first encoder to obtain the first CSI feedback information, that is, the first CSI feedback information is an encoding result of the first CSI. Specifically, the first CSI feedback information can be understood as a result of decoding and then re-encoding the second CSI feedback information. Therefore, the first CSI feedback information and the second CSI feedback information have the same data structure, for example, each can be a bitmap. It can be understood that the better the CSI feedback performance (i.e., the better the performance of the auto-encoder model), the closer the first CSI feedback information is to the second CSI feedback information.

It should be noted that, in some embodiments, the step of the network device decoding the second CSI feedback information into the first CSI and the step of encoding the first CSI into the first CSI feedback information may be interrelated. Exemplarily, each time the network device obtains the first CSI by decoding, the network device encodes the first CSI into the first CSI feedback information to perform real-time CSI feedback performance evaluation. In other embodiments, the step of the network device decoding the second CSI feedback information into the first CSI and the step of encoding the first CSI into the first CSI feedback information may be decoupled. Exemplarily, each time the network device obtains the first CSI by decoding, the network device uses the first CSI to configure a data transmission mode and stores the first CSI. When certain conditions are satisfied to trigger CSI feedback performance evaluation, the network device encodes the first CSI into the first CSI feedback information for evaluating the CSI feedback performance.

It can be understood that in embodiments of the disclosure, the CSI feedback performance is related to the performance of the first encoder and the performance of the first decoder. Evaluating the CSI feedback performance can also be understood as evaluating the performance of the first encoder and/or the performance of the first decoder.

Optionally, in embodiments of the disclosure, evaluating the CSI feedback performance may include qualitative or quantitative CSI feedback performance evaluation. For example, the network device may evaluate whether the CSI feedback satisfies a requirement, or determine a relevant metric used for characterizing the CSI feedback performance. In other words, the CSI feedback performance in embodiments of the disclosure may refer to whether the CSI feedback satisfies the requirement, or may refer to the relevant metric of the CSI feedback.

It can be seen that in the above method for evaluating CSI feedback performance, in embodiments of the disclosure, the first encoder is configured in the network device. The network device completes at least one decoding and encoding process on the received second CSI, and evaluates CSI feedback performance based on information generated from the complete decoding and encoding process. Since the evaluation is directly performed based on relevant information from the encoder and decoder, rather than indirectly through system transmission performance, high accuracy is achieved. In addition, since there is no need for the network device and the terminal device to transmit CSI during each performance evaluation, transmission overhead can be effectively controlled. Furthermore, the terminal device does not need to consume excessive computational power and power consumption for model performance evaluation, thus avoiding increased capability requirements on the terminal device.

In some embodiments, the above step S420, where the network device evaluates the CSI feedback performance based on the first CSI feedback information, may include the following. The network device determines a first metric based on the first CSI feedback information and the second CSI feedback information, and the first metric is used for characterizing the CSI feedback performance. According to the embodiment, metric calculation can be performed based on the first CSI feedback information and the second CSI feedback information to quantitatively and accurately reflect the CSI feedback performance.

Optionally, the first metric is related to a difference and/or similarity between the first CSI feedback information and the second CSI feedback information. In other words, the first metric can reflect a comparison result between the first CSI feedback information and the second CSI feedback information.

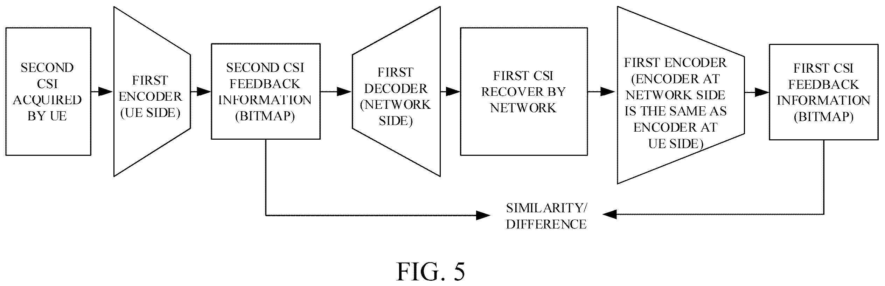

FIG. 5 illustrates a schematic flowchart of the method for evaluating CSI feedback performance in this embodiment. According to the flow illustrated in FIG. 5, when the CSI feedback model (including the first encoder and the first decoder) has high feedback accuracy, the first CSI recovered at the network side is highly consistent with the original CSI (i.e., the second CSI) fed back at the UE side. Therefore, when the encoder model is reused to encode the first CSI, the obtained first CSI feedback information should be highly consistent with the second CSI feedback information received at the network side. When the feedback accuracy of the CSI feedback model is low, there is a large difference between the first CSI recovered at the network side and the second CSI fed back at the UE side. Thus, when the first encoder is reused to encode the first CSI recovered at the network side, the obtained first CSI feedback information should have a large difference from the second CSI feedback information received at the network side. By using the first metric related to the difference and/or similarity between the first CSI feedback information and the second CSI feedback information, the CSI feedback performance can be accurately reflected.

Optionally, the first metric includes at least one of the following:
a ratio of the number of error bits in N bits of the first CSI feedback information to N, where each of the error bits in the first CSI feedback information is a bit having a different value from a bit at the same bit position in the second CSI feedback information;
the number of error bits;
a mean square error between the first CSI feedback information and the second CSI feedback information;
a normalized mean square error between the first CSI feedback information and the second CSI feedback information;
a Euclidean distance between the first CSI feedback information and the second CSI feedback information;
a Hamming distance between the first CSI feedback information and the second CSI feedback information; and
a cosine similarity between the first CSI feedback information and the second CSI feedback information.

Exemplarily, the first metric may include the number of error bits or the ratio of the number of error bits to *N,* so as to directly reflect the magnitude of difference between the first feedback information and the second feedback information. If the value of the i-th bit in the first CSI feedback information is different from the value of the i-th bit in the second CSI feedback information, the i-th bit in the first CSI feedback information is an error bit.

For example, both the first CSI feedback information and the second CSI feedback information contain 8 bits. The first CSI feedback information is 11101110, and the second CSI information is 11101111. Then, the 8th bit in the first CSI feedback information has a different value from the 8th bit in the second CSI feedback information, so the 8th bit is an error bit. The number of error bits is 1, and the ratio of the number of error bits to the number of bits *N* in the first feedback information is 1/8. It can be understood that this ratio may also be called the bit error rate.

Exemplarily, the first metric may include a mean square error or a normalized mean square error between the first CSI feedback information and the second CSI feedback information, reflecting the overall difference degree between the first feedback information and the second feedback information. Error calculation can be performed bit by bit between each bit in the first CSI feedback information and the corresponding bit in the second CSI feedback information to obtain a set of errors, and the mean square error or normalized error is determined based on this set of errors.

Exemplarily, the first metric may include a Euclidean distance, Hamming distance, or cosine similarity between the first feedback information and the second feedback information, reflecting the similarity between the first feedback information and the second feedback information.

Exemplarily, the first metric may include the number of error bits, mean square error, and Euclidean distance, so as to comprehensively evaluate the CSI feedback performance by combining different types of metrics. It can be understood that in practical applications, the first metric can also be implemented in other ways, specifically according to different application scenarios, protocols or system conventions.

Optionally, in embodiments of the disclosure, the network device may evaluate the CSI feedback performance based on one set of CSI feedback information corresponding to a single received CSI (the set of CSI feedback information includes the received CSI feedback information and the CSI feedback information obtained through decoding and re-encoding), or based on multiple sets of CSI feedback information corresponding to multiple CSI. When evaluating the CSI feedback performance based on multiple sets of CSI feedback information, a first metric may be determined for each set of CSI feedback information, and then an average value of the first metrics corresponding to the respective sets is taken to evaluate the CSI feedback performance.

Optionally, the network device may also evaluate the CSI feedback performance by comparing CSI. Specifically, in some embodiments, the above step S420, where the network device evaluates the CSI feedback performance based on the first CSI feedback information, may include the following. The network device processes the first CSI feedback information based on the first decoder to obtain a third CSI, and determines a second metric based on the first CSI and the third CSI, where the second metric is used for characterizing the CSI feedback performance.

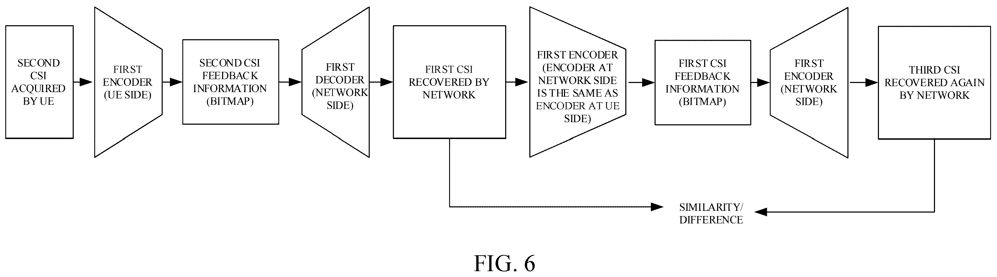

FIG. 6 illustrates a schematic flowchart of the method for evaluating CSI feedback performance in this embodiment. According to the process illustrated in FIG. 6, it can be understood that when the CSI feedback model (including the first encoder and the first decoder) has high feedback accuracy, the third CSI recovered again at the network side is highly consistent with the first CSI recovered for the first time. When the feedback accuracy of the CSI feedback model is low, there is a large difference between the third CSI recovered again at the network side and the first CSI recovered for the first time. Therefore, the second metric determined based on the first CSI and the third CSI can accurately reflect the CSI feedback performance.

Optionally, this embodiment and the aforementioned embodiment of determining the first metric can be implemented independently or in combination. That is, the CSI feedback performance can be evaluated based on a single metric or a combination of multiple metrics.

Similarly, the second metric may be set with reference to the setting of the first metric in the aforementioned embodiments. For example, the second metric may be related to the difference and/or similarity between the first CSI and the third CSI. In addition, the second metric may include at least one of a mean square error, normalized mean square error, Euclidean distance, Hamming distance, and cosine distance between the first CSI and the third CSI, which is not limited in the disclosure.

According to the idea of the above embodiments, further encoding and/or further decoding can also be performed based on the third CSI, and the information obtained from the further encoding and/or further decoding can be used for evaluating the CSI feedback performance. It can be understood that technical solutions obtained by further re-encoding and/or further re-decoding all belong to variations or replacements of the above embodiments of the disclosure and should fall within the scope of the present disclosure.

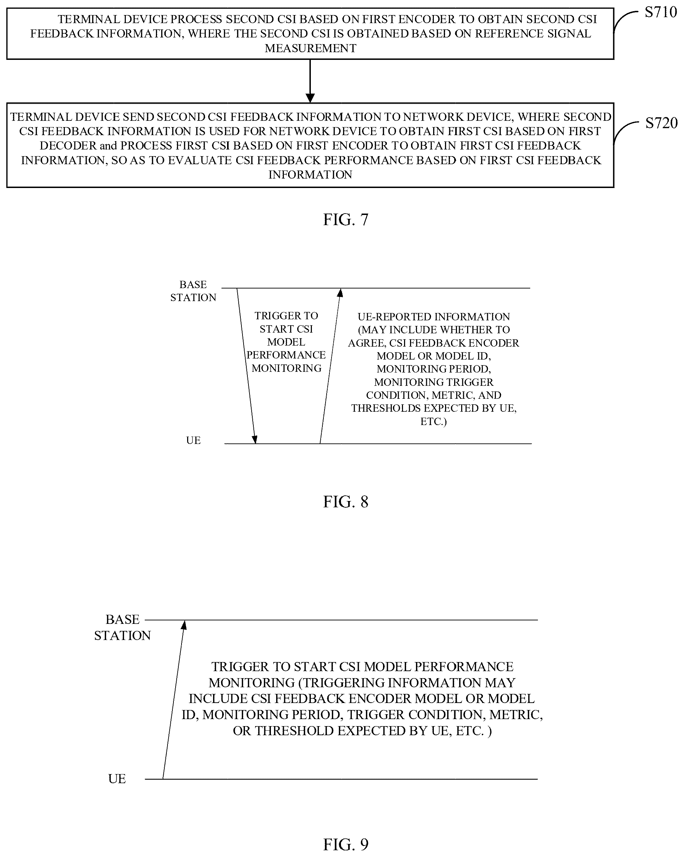

Corresponding to the above method, FIG. 7 is a schematic flowchart of a method for evaluating CSI feedback performance according to another embodiment of the disclosure. This method can optionally be applied to the system illustrated in FIG. 1, but is not limited thereto. The method includes the following.

S710, a terminal device processes a second CSI based on a first encoder to obtain second CSI feedback information, where the second CSI is obtained based on reference signal measurement.

S720, the terminal device sends the second CSI feedback information to a network device, where the second CSI feedback information is used for the network device to obtain a first CSI based on a first decoder and process the first CSI based on the first encoder to obtain a first CSI feedback information, so as to evaluate the CSI feedback performance based on the first CSI feedback information.

It can be understood that the terminal device may send the second CSI feedback information to the network device when obtaining the second CSI based on reference signal measurement. The second CSI feedback information may be used for the network device to learn the current channel condition and also for the network device to evaluate the CSI feedback performance.

Optionally, after evaluating the CSI feedback performance, the network device may adopt one or more further processing manners.

Exemplarily, in some embodiments, the above method may further include the following. The network device sends first indication information to the terminal device, where the first indication information is used for indicating the CSI feedback performance.

According to this embodiment, the network device may indicate the CSI feedback performance by sending the first indication information, and the terminal device determines whether to take action.

Correspondingly, from the perspective of the terminal device, the above method may further include the following. The terminal device receives the first indication information from the network device, where the first indication information indicates the CSI feedback performance.

Optionally, the first indication information is used for indicating a third metric, and the third metric is used for characterizing the CSI feedback performance. Exemplarily, the third metric may include the above-mentioned first metric and/or second metric. That is, the network device may send a specific value(s) of the relevant metric(s) to the terminal device, and the terminal device determines whether the CSI feedback performance satisfies the requirement, thereby determining whether to take action.

Optionally, the first indication information is used for indicating whether the CSI feedback performance satisfies a preset condition. In any embodiment of the disclosure, the preset condition may be that the first CSI feedback information is the same as the second CSI feedback information, or the first CSI is the same as the third CSI, etc. The preset condition may also be related to the third metric and a corresponding threshold, where the third metric may include the above-mentioned first metric and/or second metric. For example, the preset condition may be that a similarity-related metric in the third metric is greater than or equal to a first threshold, or an error-related metric in the third metric is less than or equal to a second threshold, etc.

It should be noted that the first indication information may also indicate both the third metric and whether the CSI feedback performance satisfies the preset condition, so that the terminal device can directly obtain comprehensive information related to the CSI feedback performance.

In some embodiments, the above method may further include the following. The network device sends second indication information to the terminal device when the CSI feedback performance does not satisfy the preset condition, where the second indication information is used for indicating to the terminal device to perform a predetermined processing on the first encoder.

Optionally, when the CSI feedback performance does not satisfy the preset condition, the network device may only send the second indication information, or send both the first indication information and the second indication information.

Correspondingly, from the perspective of the terminal device, the above method may further include the following. When receiving the second indication information from the network device, the terminal device determines that the CSI feedback performance does not satisfy the preset condition and performs the predetermined processing on the first encoder.

Optionally, the predetermined processing includes one of the following:
switching to use another encoder of Z encoders of the terminal device other than the first encoder, Z being an integer greater than 1;
updating the first encoder;
fine-tuning the first encoder, where the fine-tuning refers to performing a small amount of training on a new dataset to obtain better performance; and
processing, based on a codebook, a fifth CSI obtained based on reference signal measurement.

The Z encoders may be all or part of the encoders configured in the terminal device. For example, the terminal device may have K encoders, and the network device may configure the terminal device to use/switch among Z encoders of the K encoders. In other words, the network device may activate the Z encoders of the K encoders, that is, Z may be less than or equal to *K.*

Optionally, the fifth CSI may be a CSI obtained by the terminal device based on reference signal measurement after receiving the second indication information, that is, the network device indicates to the terminal device to fall back to the manner of using the codebook to process subsequent CSI obtained based on reference signal measurement.

In some embodiments, the above method further includes the following. The network device maintains to use the first encoder when the CSI feedback performance satisfies the preset condition. That is, the network device may not perform relevant processing on the first encoder. Optionally, the network device may send the first indication information to the terminal device or not send the first indication information to the terminal device, i.e., take no action. It can be understood that the network device may continuously monitor and evaluate the CSI feedback performance, indicate to the terminal device when the evaluation reflects that the CSI feedback performance does not satisfy the condition, and not indicate to the terminal device when the evaluation reflects that the CSI feedback performance satisfies the condition.

The following exemplarily describes the implementations of configuring the first encoder and the first decoder in the embodiments of the disclosure.

In an implementation, the first encoder and the first decoder may be configured by the network device. Correspondingly, the above method may further include that the network device sends fourth indication information to the terminal device, where the fourth indication information is used for indicating relevant information of the first encoder.

Correspondingly, from the perspective of the terminal device, the above method may further include that the terminal device receives the fourth indication information from the network device, where the fourth indication information is used for indicating relevant information of the first encoder.

By way of explanation rather than limitation, the fourth indication information may be carried by a Radio Resource Control (RRC) message, broadcast configuration information, a MAC Control Element (MAC CE), or Downlink Control Information (DCI).

Exemplarily, the relevant information of the first encoder may include information such as an identifier (ID) and a parameter of the first encoder, so that the terminal device can configure the first encoder in the terminal device based on the relevant information.

According to this implementation, both the first encoder and the first decoder are provided by the network device, where the network device delivers and configures the encoder to the terminal device. In this way, the model information in the terminal device and the network device can be aligned.

In an implementation, the first encoder is pre-configured in the terminal device, the first decoder is pre-configured in the network device, and the terminal device and the network device can align model information by information transmission. That is, for the terminal device, the first encoder is pre-configured, and the terminal device can send relevant information of the first encoder to the network device. For the network device, the first decoder is pre-configured, and the first encoder can be determined based on the relevant information sent by the terminal device. In practical applications, the first encoder and/or the first decoder may be predefined or obtained through a third-party channel or a protocol. The pre-configuration manner of the first encoder and/or the first decoder are not limited in embodiments of the disclosure.

The following exemplarily describes the implementations of triggering the CSI feedback performance evaluation in the embodiments of the disclosure.

In an implementation, the CSI feedback performance evaluation is triggered by the network device. Specifically, before the network device processes the first CSI based on the encoder to obtain the first CSI feedback information, the method for evaluating CSI feedback performance further includes the following. The network device sends third indication information to the terminal device, where the third indication information is used for triggering the CSI feedback performance evaluation. In other words, the third indication information is used for requesting or notifying the CSI feedback performance evaluation.

Optionally, the third indication information may also be used for indicating to the terminal device to send information related to the CSI feedback performance evaluation. For example, in the absence of a first encoder configured in the network device, the third indication information may also be used for indicating to the terminal device to report relevant information of the first encoder.

Optionally, the above method may further include that the terminal device sends first report information to the network device based on a receipt of the third indication information from the network device. Correspondingly, after the network device sends the first indication information to the terminal device, the above method further includes that the network device receives the first report information from the terminal device.

The first report information is used for indicating at least one of the following:
whether to agree to evaluate CSI feedback performance;
relevant information of the first encoder;
a first evaluation period;
a type of a fourth metric, where the fourth metric is used for characterizing CSI feedback performance; and
a first metric threshold.

The first evaluation period may be a terminal-device expected period for evaluating CSI feedback performance. In practical applications, this period may be greater than or equal to a period of CSI feedback. For example, CSI may be fed back once every 10 milliseconds (ms), and CSI feedback performance may be evaluated once every 100ms based on ten CSI feedbacks within the 100ms.

Exemplarily, the type of the fourth metric is a terminal-device expected type of metric for characterizing CSI feedback performance. The fourth metric may be the same as or different from the third metric in the foregoing embodiments. Optionally, the type of the fourth metric includes at least one of the bit error rate, the number of error bits, the mean square error, the normalized mean square error, the Euclidean distance, the Hamming distance, and the cosine similarity.

Exemplarily, the first metric threshold may be a terminal-device expected threshold for determining whether CSI feedback performance satisfies a preset condition. The first metric threshold may be related to a metric for characterizing CSI feedback performance, for example, the first metric threshold is a threshold for the bit error rate, a threshold for the mean square error, etc.

Exemplarily, the first report information may include whether to agree to evaluate CSI feedback performance and the relevant information of the first encoder. For example, the first encoder is pre-configured in the terminal device, and the network device needs to request the CSI feedback performance evaluation through the third indication information. Correspondingly, the terminal device may indicate in the first report information whether to agree to evaluate the CSI feedback performance, and if agreeing to evaluate CSI feedback performance, the terminal device may also indicate the relevant information of the first encoder in the first report information, so that the network device can configure the first encoder in the network device.

Exemplarily, the first report information may include the first evaluation period, the type of the fourth metric, or the first metric threshold expected by the terminal device. For example, the terminal device reports the first evaluation period, the type of the fourth metric, or the first metric threshold according to its own capability, and the network device evaluates the CSI feedback performance based on the first report information, so that the evaluation result can be adjusted according to the capability of the terminal device, that is, the frequency of switching/updating/fine-tuning the encoder model can be coordinated according to the capability of the terminal.

Optionally, the first report information may be carried by a first RRC message, Uplink Control Information (UCI), or a Physical Uplink Shared Channel (PUSCH).

Optionally, the third indication information may be carried by a second RRC message, a MAC CE, or DCI.

In an implementation, the CSI feedback performance evaluation is triggered by the terminal device. Specifically, the above method may further include that the terminal device sends second report information to the network device, where the second report information is used for triggering the CSI feedback performance evaluation.

Correspondingly, from the perspective of the network device, before the network device processes the first CSI based on the encoder to obtain the first CSI feedback information, the above method may further include that the network device receives the second report information from the terminal device, where the second report information is used for triggering the CSI feedback performance evaluation.

Exemplarily, the second report information is used for indicating at least one of the following:
relevant information of the first encoder;
a second evaluation period;
a type of a fifth metric, the fifth metric being used for characterizing CSI feedback performance; and
a second metric threshold.

The second report information may be configured with reference to the configuration of the first report information in the foregoing embodiments. For example, the second evaluation period may be a period for evaluating CSI feedback performance expected by the terminal device, the type of the fourth metric may be a type of metric expected by the terminal device for characterizing CSI feedback performance, and the second metric threshold may be a threshold expected by the terminal device for determining whether CSI feedback performance satisfies a preset condition. The second report information is different from the first report information in that the second report information, actively reported by the terminal device, does not need to carry an indication of whether to agree to evaluate CSI feedback performance. Reference for relevant technical details of other information may be made to the foregoing descriptions, which will not be repeated herein.

Optionally, the second report information may be carried by an RRC message, UCI, or a PUSCH.

It should be noted that in the embodiments of the disclosure, triggering the CSI feedback performance evaluation may refer to triggering one or more evaluations of the CSI feedback performance. For example, after the network device triggers the CSI feedback performance evaluation and causes the terminal device to report the relevant information of the first encoder, or after the terminal device actively reports the relevant information of the first encoder, the network device may periodically perform multiple CSI feedback performance evaluations. That is, the terminal device only reports the encoder model once, which can then support an unlimited number of subsequent CSI feedback performance monitoring and evaluation cycles. Compared with the solution where the terminal device or the network device needs to transmit CSI to the opposite side for each evaluation, the embodiments of the disclosure can significantly reduce the occupation of transmission resources.

Optionally, the embodiments of the disclosure also support evaluating the feedback performance of each encoder/decoder when there are multiple encoders and/or multiple decoders.

In some embodiments, when there are multiple decoders, the above method can be used for evaluating the feedback performance of each decoder. Specifically, the first decoder mentioned above is the i-th decoder among *M* decoders, where *M* is an integer greater than 1, and *i* is a positive integer not greater than *M.* The first CSI feedback information is used for evaluating the CSI feedback performance of the i-th decoder. That is, when *M* decoders are deployed, to evaluate the performance of the i-th decoder among the *M* decoders, the network device processes the received second CSI feedback information based on the i-th decoder to obtain the first CSI, then processes the first CSI based on the first encoder to obtain the first CSI feedback information, and evaluates the CSI feedback performance of the i-th decoder based on the first CSI feedback information.

Optionally, the above method can be used for evaluating the CSI feedback performance of each of the *M* decoders, that is, *i* can take each value from 1 to *M.* It should be noted that different decoders can process the same received CSI feedback information, or process different CSI feedback information.

The CSI feedback performance of each decoder of the *M* decoders can be used for selecting/switching to a decoder to be subsequently used by the network device. Specifically, the above method further includes that the network device determines a second decoder among the *M* decoders based on the CSI feedback performance of each decoder of the *M* decoders, where the second decoder is used by the network device to process third CSI feedback information from the terminal device. Exemplarily, the third CSI feedback information may refer to the CSI feedback information received from the terminal device after the second decoder is determined.

Optionally, the network device can select a decoder with the optimal performance among the *M* decoders as the second decoder according to a relevant metric.

In some embodiments, when there are multiple encoders, the above method can be used for evaluating the feedback performance of each encoder. Specifically, the first encoder mentioned above is the *j*-th encoder of *K* encoders, where *K* is an integer greater than 1, and *j* is a positive integer not greater than K. Correspondingly, the first CSI feedback information is used for evaluating the CSI feedback performance of the *j*-th encoder. That is, when K encoders are deployed, to evaluate the performance of the *j*-th encoder of K encoders, the network device processes the received second CSI feedback information based on the first decoder to obtain the first CSI, then processes the first CSI based on the *j*-th encoder to obtain the first CSI feedback information, and evaluates the CSI feedback performance of the *j*-th encoder based on the first CSI feedback information.

Optionally, the above method can be used for evaluating the CSI feedback performance of each of the *K* encoders, that is, *j* can take each value from 1 to *K.* The evaluation of the *j*-th encoder can be performed based on the decoding and re-encoding process of the second CSI feedback information encoded by this encoder.

The CSI feedback performance of each encoder of the K encoders can be used for selecting/switching to an encoder to be subsequently used by the terminal device. Specifically, the CSI feedback performance of each encoder of the K encoders is used for determining a second encoder among the K encoders, and the second encoder is used by the terminal device to process a fourth CSI obtained based on reference signal measurement. Exemplarily, the fourth CSI may refer to the CSI obtained based on reference signal measurement after the second encoder is determined.

Optionally, the network device can determine the second encoder among the K encoders and indicate relevant information (such as ID) of the second encoder through the first indication information mentioned in the foregoing embodiments. Alternatively, the network device can indicate the CSI feedback performance of each encoder through the first indication information, and the terminal device determines the second encoder among the *K* encoders.

As described above, the evaluation of the *j*-th encoder can be performed based on the decoding and re-encoding process of the second CSI feedback information encoded by this encoder. An exemplary method for the network device to determine the encoder corresponding to the received CSI feedback information is provided below. Exemplarily, before the network device processes the first CSI based on the first encoder to obtain the first CSI feedback information, the method further includes that the network device sends first configuration information to the terminal device, where the first configuration information is used for indicating to the terminal device to process the second CSI based on the *j*-th encoder.

Correspondingly, before the terminal device processes, based on the first encoder, the second CSI obtained based on reference signal measurement to obtain the second CSI feedback information, the above method further includes that the terminal device receives the first configuration information from the network device, and determines the first encoder among the *K* encoders based on the first configuration information, *K* being an integer greater than 1.

That is, the network device sends the first configuration information to enable the terminal device to use the *j*-th encoder to process the CSI obtained based on reference signal measurement, so as to obtain the corresponding CSI feedback information. In this way, the network device can determine that the subsequently received CSI feedback information includes an encoding result corresponding to the *j*-th encoder.

Optionally, the first configuration information includes an encoder ID sequence, and the encoder ID sequence includes IDs of *X* encoders. The encoder ID sequence is used for indicating to the terminal device to process, sequentially based on the *X* encoders, the second CSI obtained based on reference signal measurement to obtain multiple CSI feedback information, where the multiple CSI feedback information includes CSI feedback information corresponding to each of the *X* encoders. The *X* encoders include the *j*-th encoder, and *X* is an integer greater than 1. That is, the network device sends the first configuration information to configure the terminal device to sequentially use each of the *X* encoders to process the CSI obtained based on reference signal measurement, so as to obtain CSI feedback information corresponding to each of the *X* encoders. For example, the multiple encoders configured in the terminal device and the network device include encoder 1, encoder 2, encoder 3, and encoder 4. The network device may send the first configuration information to the terminal device, where the first configuration information carries the sequence {1, 3, 4}, to indicate to the terminal device to sequentially use encoder 1, encoder 3, and encoder 4 for encoding to obtain corresponding CSI feedback information. Optionally, the encoder ID sequence may contain repeated or identical IDs. For example, the encoder ID sequence carried by the network device in the first configuration information is {1, 2, 3, 1}, the *X* encoders include the repeated encoder 1, and the terminal device needs to use encoder 1 twice for CSI encoding in the next four CSI encodings.

Correspondingly, the above method may further include that the terminal device sequentially sends multiple CSI feedback information to the network device. The multiple CSI feedback information is used for the network device to determine the second CSI feedback information corresponding to the first encoder based on the encoder ID sequence.

That is, according to the encoder ID sequence, the network device can determine the correspondence between the subsequently received CSI feedback information and each encoder indicated by the encoder ID sequence. Then the network device can determine the CSI feedback information corresponding to a specific encoder from the received multiple feedback information, and then evaluate the CSI feedback performance of the encoder. Specifically, the above method may further include that the network device receives the multiple CSI feedback information from the terminal device, and determines the second CSI feedback information corresponding to the *j*-th encoder from the multiple CSI feedback information based on the encoder ID sequence.

It should be noted that the number *X* of encoders indicated by the above encoder ID sequence may be the same as or different from the number *K* of encoders in the terminal device. Specifically, *X* may be less than, equal to, or greater than *K.* For example, the encoder ID sequence needs to contain IDs of all encoders without repeated or identical encoder IDs, and the sequence is mainly used for indicating the order of the encoders, so *X* is equal to *K.* For another example, the encoder ID sequence may contain IDs of some encoders, that is, the encoder ID sequence is used for indicating both the IDs of respective encoders to be subsequently used by the terminal device and the order of the respective encoders, so *X* may be different from *K.* Furthermore, if the encoder ID sequence can include repeated encoder IDs, *X* may be greater than *K*, and if the encoder ID sequence cannot include repeated encoder IDs, *X* is less than *K*.

In some embodiments, when there are multiple encoders and multiple decoders, the above method can be used for evaluating feedback performance of a combination of each encoder and each decoder.

Optionally, the first encoder is the *j*-th encoder of *K* encoders, where *K* is an integer greater than 1, and *j* is a positive integer not greater than *K*; the first decoder is the i-th decoder of *M* decoders, where *M* is an integer greater than 1, and *i* is a positive integer not greater than *M*; and the first CSI feedback information is used for evaluating the CSI feedback performance of the combination of the *j*-th encoder and the *i*-th decoder.

Correspondingly, the above method further includes the following. The network device determines the second encoder among the K encoders and the second decoder among the *M* decoders based on the CSI feedback performance of the combination of each encoder among the *K* encoders and each decoder among the *M* decoders, where the second decoder is used by the network device to process third CSI feedback information from the terminal device, and the second encoder is used by the terminal device to process a fourth CSI obtained based on reference signal measurement.

Reference for the specific processing method for the *i*-th decoder and the*j*-th encoder may be made to the foregoing embodiments, which will not be repeated herein. Exemplarily, the network device can combine each encoder with each decoder to obtain multiple combinations of encoders and decoders, and evaluate the CSI feedback performance for each combination. Optionally, the network device can employ the processing method for multiple encoders in the foregoing embodiments (for example, indicating the order of encoders through an encoder ID sequence) to obtain CSI feedback information corresponding to the *j*-th encoder, and use multiple decoders separately to process the CSI feedback information, so as to evaluate the CSI feedback performance of the combination of the *j*-th encoder and each decoder. Similarly, the CSI feedback performance evaluation of each combination of encoder and decoder can be implemented.

For ease of understanding the above technical solutions, two specific application examples are provided below.

### Application Example 1

In this application example, a single encoder and a single decoder are deployed in a user equipment (UE) and a network device (taking a base station as an example). The CSI feedback performance evaluation is used for determining whether to update/fine-tune the model of the encoder and decoder, or to fall back to using a codebook for CSI feedback.

This application example includes the following.

### (1) Triggering CSI feedback model performance monitoring

As a basic condition for implementing AI-based CSI feedback, the UE and the base station need to respectively have matching encoder models and decoder models. The ways to obtain the models include the following options:
Provided by the base station: the base station itself has a trained model and delivers and configures the encoder of the model to the UE (for example, indicating through an RRC message, broadcast configuration, MAC CE, or DCI).

Predefined by manufacturer: the manufacturer of the UE and the base station have respectively predefined encoder and decoder models that can be used for CSI feedback. In this case, the UE needs to report the information of the held model and the corresponding ID to the base station (for example, indicating through an RRC message, UCI, or a PUSCH) to achieve alignment of model information between the base station and the UE.

Obtained through third-party channels or protocols.

During the operation of the CSI feedback model, due to factors such as UE movement and changes in the wireless communication environment, the CSI feedback model performance often fluctuates. Therefore, it is necessary to trigger model performance monitoring through the UE or the base station.

Specifically, if the base station triggers CSI feedback model performance monitoring, the trigger signaling can be sent to the UE through RRC, MAC CE, DCI, or other means. As a corresponding feedback, the information that the UE may need to report to the base station includes but is not limited to:
a) whether to agree to perform performance monitoring;
b) a CSI encoder model and/or a model ID used by the UE;
c) a monitoring period or monitoring trigger condition expected by the UE;
d) a monitoring metric expected by the UE;
e) a monitoring threshold expected by the UE.

The above information may be reported by the UE to the base station through RRC, UCI, PUSCH, or other means. The trigger process is as illustrated in FIG. 8.

If the UE triggers CSI feedback model performance monitoring, the trigger signaling can be reported to the base station through RRC, UCI, PUSCH, or other means. The information that the UE can report to the base station in the trigger information includes but is not limited to:
a) the CSI encoder model and/or the model ID used by the UE;
b) the monitoring period or monitoring trigger condition expected by the UE;
c) the monitoring metric expected by the UE;
d) the monitoring threshold expected by the UE.

The above trigger information can be implemented through RRC, UCI, PUSCH, or other means. The trigger process is as illustrated in FIG. 9.

### (2) Implementing CSI feedback model performance monitoring

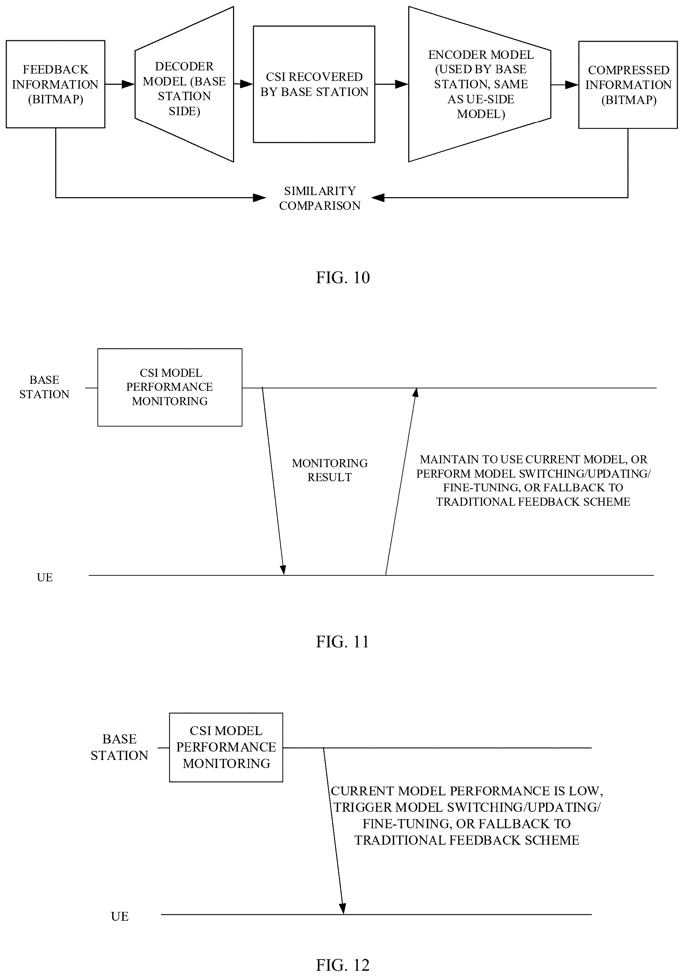

Through the previous steps, the base station has obtained or learned the encoder model consistent with the encoder model at the UE side. The base station uses the encoder model to re-encode an output of a decoder model (CSI recovered by the base station), and then monitors and evaluates the model performance by comparing the compressed information output by the encoder model and the feedback information input into the decoder model, as specifically illustrated in FIG. 10.

A metric for evaluating the CSI feedback model performance, that is, a criteria for determining the similarity between the feedback bitmap and the re-compressed bitmap, may include but is not limited to:
a) a bit error rate (i.e., a ratio of the number of different bits to the total number of bits);
b) the total number of error bits;
c) a mean square error or a normalized mean square error;
d) a Euclidean distance between two encoded vectors;
e) a Hamming distance between two encoded vectors;
f) a cosine similarity between two encoded vectors.

The above metric can be calculated for a single CSI sample or obtained through a statistic of multiple CSI samples within a period of time. The selection of the evaluation criteria can be performed by the base station or implemented through reporting by the UE.

### (3) Triggering subsequent action based on performance monitoring result

The base station can continuously monitor the CSI model performance and determine whether the CSI model performance satisfies a monitoring threshold (the threshold can be set by the base station or reported by the UE). Potential actions that the base station can trigger are listed as follows:
a) sending the monitoring result to the UE to allow the UE to determine whether to take action, as specifically illustrated in FIG. 11. The content sent may be whether the monitoring metric satisfies the threshold (which can be indicated by 1 bit) or the specific value of the monitoring metric.
b) the base station determining that the performance of the CSI model is acceptable and no action is needed.
c) the base station determining that the performance of the CSI model does not satisfy the requirement, then sending information to the UE to trigger switching, updating, or fine-tuning of the CSI model, or falling back to the traditional feedback scheme, etc., as specifically illustrated in FIG. 12.

### Application Example 2

In this application example, multiple encoders and/or multiple decoders are deployed in a UE and a network device (such as a base station). The CSI feedback performance evaluation is used for determining whether to select/switch the models of the encoders and/or decoders.

Specifically, this application example is applicable to the following three scenarios:
a) the UE has one encoder model, and the base station has multiple decoder models that can work in combination with the encoder model.
b) the UE has multiple encoder models, and the base station also has multiple decoder models that can work in combination with encoder models of the UE.
c)the UE has multiple encoder models, and the base station has one decoder model that can work in combination with the encoder models.

### (1) Triggering CSI feedback model performance monitoring

During the operation of the CSI feedback model, due to factors such as UE movement and changes in the wireless communication environment, the CSI feedback model performance often fluctuates, and the currently used CSI feedback model may no longer be the most suitable model. Therefore, it is necessary to trigger model selection/switching through the UE or the base station.

If the base station triggers CSI feedback model selection/switching for some reason, the trigger signaling can be delivered to the UE through RRC, MAC CE, DCI, or other means. Correspondingly, the information that the UE may need to report to the base station includes but is not limited to:
a) whether to agree to model selection/switching;
b) a CSI encoder model and/or a model ID used by the UE (if the UE has multiple available encoder models, multiple sets of models and/or model IDs can be reported);
c) a model selection/switching period or trigger condition expected by the UE;
d) a reference metric for model selection/switching expected by the UE.

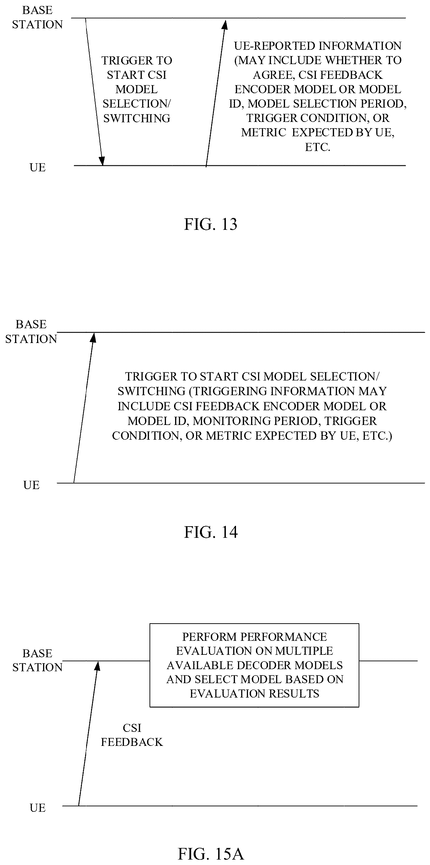

The above information may be reported by the UE to the base station through RRC, UCI, PUSCH, or other means. The trigger process is as illustrated in FIG. 13.

If the base station triggers CSI feedback model selection/switching, the trigger signaling can be reported to the base station through RRC, UCI, PUSCH, or other means. The information that the UE can report to the base station in the trigger information includes but is not limited to:
e) the CSI encoder model and/or the model ID used by the UE (if the UE has multiple available encoder models, multiple sets of models and/or model IDs can be reported);
f) the model selection/switching period or trigger condition expected by the UE;
g) the reference metric for model selection/switching expected by the UE.

The above trigger information can be implemented through RRC, UCI, PUSCH, or other means. The trigger process is as illustrated in FIG. 14.

### (2) Implementing CSI feedback model performance monitoring

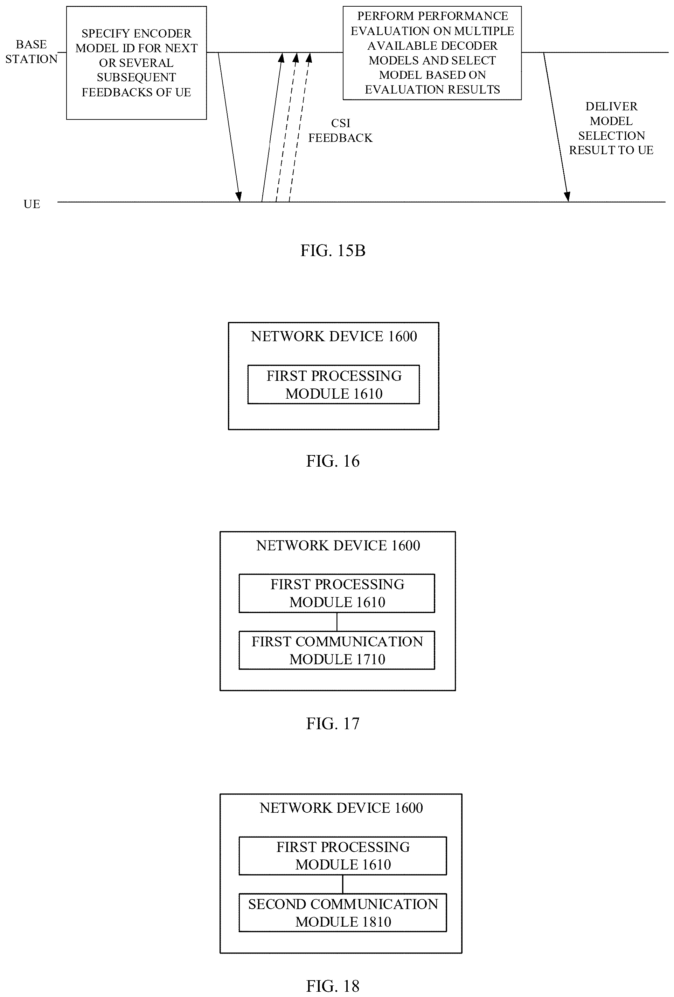

Through the previous steps, the base station has obtained or learned the encoder model(s) consistent with (one or more) model(s) at the UE side. In the scenario where the UE can only use a single encoder model, the base station needs to evaluate the performance of multiple available decoder models on the base station side in accordance with the performance evaluation method described in embodiment 1, with specific reference to FIG. 15A. In the scenario where the UE has multiple available encoder models, the base station needs to deliver configuration information specifying the ID(s) of encoder(s) to be used by the UE for the next feedback or several subsequent feedbacks (the configuration information can be a sequence specifying the encoder model IDs corresponding to several subsequent feedbacks). After receiving the feedback information, the base station can test the performance of different encoder-decoder model combinations by using different decoder models, with specific reference to FIG. 15B.

Potential options of a metric for comparing the performance of different models, that is, a criterion for evaluating a similarity between the feedback bitmap and the re-compressed bitmap corresponding to different models, may include but are not limited to:
g) a bit error rate (i.e., a ratio of the number of different bits to the total number of bits);
h) the total number of error bits;
i) a mean square error or a normalized mean square error;
j) a Euclidean distance between two encoded vectors;
k) a Hamming distance between two encoded vectors;
l) a cosine similarity between two encoded vectors.

The above metric can be calculated for a single CSI sample or obtained through a statistic of multiple CSI samples within a period of time. The selection of the evaluation criteria can be performed by the base station or implemented through reporting by the UE.

After completing the model performance evaluation, the base station can perform model selection/switching based on the evaluation result. In cases involving switching of the encoder model at the UE side, the base station needs to deliver signaling to inform the UE to switch.

It can be seen that the above application examples have the following advantages.

No significant additional overhead is introduced. Without updating or switching the encoder model, the UE only needs to upload the encoder model once, then an unlimited times of subsequent performance monitoring and evaluation of CSI feedback samples, avoiding occupation of transmission overhead.

No additional burden is brought to the UE. The UE only needs to upload or indicate the encoder model, without consuming additional computational power and power consumption for model performance evaluation.

Evaluation accuracy is high. The accuracy of the current CSI feedback can be reflected directly instead of using indirect metrics.

The solution is flexible and achieves high real-time evaluation. The evaluation can be performed immediately after each CSI feedback is completed, without a delay caused by transmission of the CSI itself or auxiliary information between the base station and the UE.

Based on the above advantages, this solution enables the base station and the UE to achieve accurate, reliable, and real-time performance evaluation of the CSI feedback model, thereby providing a strong basis for triggering fallback of the CSI feedback scheme, model switching, etc., and ensuring the overall wireless communication performance.

FIG. 16 illustrates a schematic block diagram of a network device 1600 according to an embodiment of the disclosure. The network device 1600 may include a first processing module 1610.

The first processing module 1610 is configured to process a first CSI based on a first encoder to obtain first CSI feedback information, where the first CSI is obtained by processing second CSI feedback information from a terminal device based on a first decoder. The second CSI feedback information is obtained by the terminal device processing a second CSI based on the first encoder, and the second CSI is obtained based on reference signal measurement.

The first processing module 1610 is further configured to evaluate CSI feedback performance based on the first CSI feedback information.

In an implementation, the first processing module 1610 is further configured to determine a first metric based on the first CSI feedback information and the second CSI feedback information, where the first metric is used for characterizing the CSI feedback performance.

In an implementation, the first metric is related to a difference and/or a similarity between the first CSI feedback information and the second CSI feedback information.

In an implementation, the first metric includes at least one of the following:
a ratio of the number of error bits in N bits of the first CSI feedback information to N, where each of the error bit in the first CSI feedback information is a bit having a different value from a bit at the same bit position in the second CSI feedback information;
the number of error bits;
a mean square error between the first CSI feedback information and the second CSI feedback information;
a normalized mean square error between the first CSI feedback information and the second CSI feedback information;
a Euclidean distance between the first CSI feedback information and the second CSI feedback information;
a Hamming distance between the first CSI feedback information and the second CSI feedback information; and
a cosine similarity between the first CSI feedback information and the second CSI feedback information.

In an implementation, the first processing module 1610 is further configured to process the first CSI feedback information based on a first decoder to obtain a third CSI, and determine a second metric based on the first CSI and the third CSI, where the second metric is used for characterizing the CSI feedback performance.

In an implementation, the first decoder is an i-th decoder of *M* decoders, where *M* is an integer greater than 1, and *i* is a positive integer not greater than *M.* The first CSI feedback information is used for evaluating CSI feedback performance of the i-th decoder.

The first processing module 1610 is further configured to
determine a second decoder among the *M* decoders based on the CSI feedback performance of each decoder of the *M* decoders, where the second decoder is used for processing third CSI feedback information from the terminal device.

In an implementation, the first encoder is a *j*-th encoder of *K* encoders, where *K* is an integer greater than 1, and *j* is a positive integer not greater than *K.* The first CSI feedback information is used for evaluating CSI feedback performance of the *j*-th encoder. The CSI feedback performance of each encoder of the *K* encoders is used for determining a second encoder of the *K* encoders, and the second encoder is used for the terminal device to process a fourth CSI obtained based on reference signal measurement.

In an implementation, as illustrated in FIG. 17, the network device 1600 further includes a first communication module 1710.
The first communication module 1710 is configured to send first configuration information to the terminal device, where the first configuration information is used for indicating to the terminal device to process the second CSI based on the *j*-th encoder.

In an implementation, the first configuration information includes an encoder ID sequence, and the encoder ID sequence includes IDs of *X* encoders. The encoder ID sequence is used for indicating to the terminal device to process the second CSI sequentially based on the *X* encoders to obtain multiple CSI feedback information, and the second CSI is obtained based on reference signal measurement. The multiple CSI feedback information include CSI feedback information corresponding to each encoder of the *X* encoders, where the *X* encoders include the *j*-th encoder, and *X* is an integer greater than 1.

Correspondingly, the first communication module 1710 is further configured to receive the multiple CSI feedback information from the terminal device. The first processing module 1610 is further configured to determine the second CSI feedback information corresponding to the *j*-th encoder among the multiple CSI feedback information based on the encoder ID sequence.

In an implementation, the first encoder is a *j*-th encoder of *K* encoders, where *K* is an integer greater than 1, and *j* is a positive integer not greater than *K.* The first decoder is an i-th decoder of *M* decoders, where *M* is an integer greater than 1, and *i* is a positive integer not greater than *M*. The first CSI feedback information is used for evaluating the CSI feedback performance of a combination of the *j*-th encoder and the *i*-th decoder.

The first processing module 1610 is further configured to determine a second encoder and a second decoder based on the CSI feedback performance of a combination of each encoder of the *K* encoders and each decoder of the *M* decoders, where the second decoder is used for processing third CSI feedback information from the terminal device. The second encoder is used for the terminal device to process a fourth CSI obtained based on reference signal measurement.

In one implementation, as illustrated in FIG. 18, the network device 1600 further includes a second communication module 1810. The second communication module 1810 is configured to send first indication information to the terminal device, where the first indication information is used for indicating the CSI feedback performance.

In an implementation, the first indication information is used for indicating a third metric, and the third metric is used for characterizing the CSI feedback performance.

In an implementation, the first indication information is used for indicating whether the CSI feedback performance satisfies a preset condition.

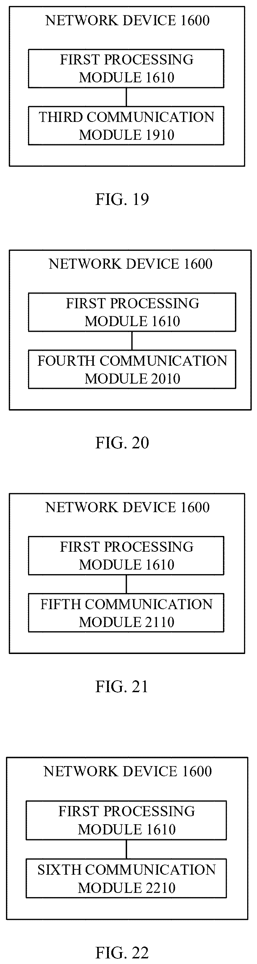

In an implementation, as illustrated in FIG. 19, the network device 1600 further includes a third communication module 1910. The third communication module 1910 is configured to send second indication information to the terminal device when the CSI feedback performance does not satisfy the preset condition, where the second indication information is used for indicating to the terminal device to perform a predetermined processing on the first encoder.

In an implementation, the predetermined processing includes one of the following:
switching to use another encoder of Z encoders of the terminal device other than the first encoder, Z being an integer greater than 1;
updating the first encoder;
fine-tuning the first encoder; and
processing, based on a codebook, a fourth CSI obtained based on reference signal measurement.

In an implementation, the first processing module 1610 is further configured to maintain to use the first encoder when determining that the CSI feedback performance satisfies the preset condition.

In an implementation, as illustrated in FIG. 20, the network device 1600 further includes a fourth communication module 2010 configured to
send third indication information to the terminal device, where the third indication information is used for triggering CSI feedback performance evaluation.

In an implementation, the fourth communication module 2010 is further configured to
receive first report information from the terminal device, where the first report information is used for indicating at least one of the following:
   whether to agree to evaluate the CSI feedback performance;
   relevant information of the first encoder;
   a first evaluation period;
   a type of a fourth metric, where the fourth metric is used for characterizing the
CSI feedback performance; and
   a first metric threshold.

In an implementation, the first report information is carried by a first RRC message, UCI, or a PUSCH.

In an implementation, the third indication information is carried by a second RRC message, a MAC CE, or DCI.

In an implementation, as illustrated in FIG. 21, the network device 1600 further includes a fifth communication module 2110 configured to receive second report information from the terminal device; where the second report information is used for triggering CSI feedback performance evaluation.

In an implementation, the second report information is used for indicating at least one of the following:
relevant information of the first encoder;
a second evaluation period;
a type of a fifth metric, where the fifth metric is used for characterizing the CSI feedback performance; and
a second metric threshold.

In an implementation, the second report information is carried by an RRC message, UCI, or a PUSCH.

In an implementation, the first encoder and the first decoder may be configured by the network device. As illustrated in FIG. 22, the network device 1600 further includes a sixth communication module 2210 configured to send fourth indication information to the terminal device, where the fourth indication information is used for indicating relevant information of the first encoder.

In an implementation, the first decoder is pre-configured, and the first encoder is determined based on relevant information sent by the terminal device.

The network device 1600 of the embodiment of the disclosure can implement the corresponding functions of the network device in the foregoing method embodiments. For the processes, functions, implementation manners, and beneficial effects corresponding to each module (sub-module, unit, or component, etc.) in the network device 1600, reference can be made to the corresponding descriptions in the above method embodiments, and details are not repeated herein. It should be noted that the functions described for each module (sub-module, unit, or component, etc.) in the network device 1600 of the embodiment of the disclosure can be implemented by different modules (sub-modules, units, or components, etc.) or by the same module (sub-module, unit, or component, etc.).

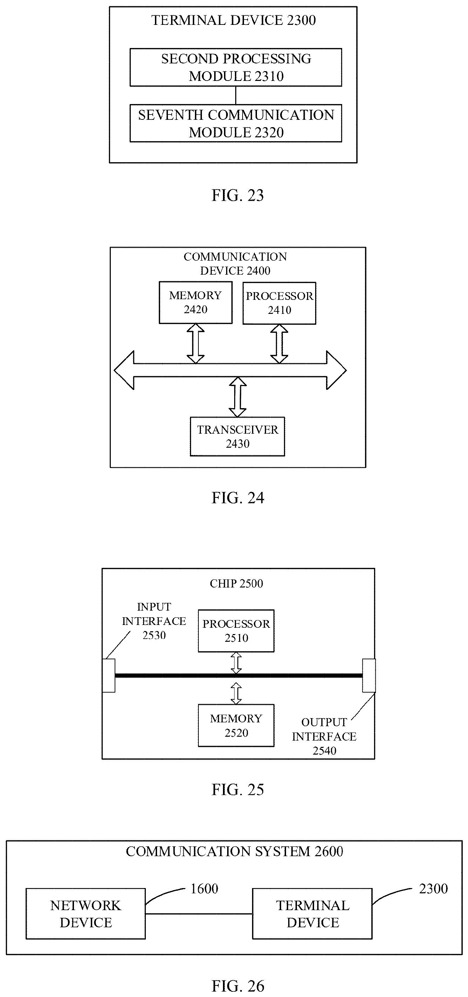

FIG. 23 illustrates a schematic block diagram of a terminal device 2300 according to an embodiment of the disclosure. The terminal device 2300 may include a second processing module 2310 and a seventh communication module 2320. The second processing module 2310 is configured to process a second CSI obtained based on reference signal measurement based on a first encoder to obtain second CSI feedback information. The seventh communication module 2320 is configured to send the second CSI feedback information to a network device, where the second CSI feedback information is used for the network device to obtain a first CSI based on a first decoder, and then evaluate CSI feedback performance based on first CSI feedback information.

In an implementation, the seventh communication module 2320 is further configured to receive first configuration information from the network device.

The second processing module 2310 is further configured to determine the first encoder among *K* encoders based on the first configuration information, where *K* is an integer greater than 1.

In an implementation, the first configuration information includes an encoder ID sequence, and the encoder ID sequence includes IDs of *X* encoders. The encoder ID sequence is used for indicating to the terminal device 2300 to process the second CSI sequentially based on the *X* encoders to obtain multiple CSI feedback information, and the second CSI is obtained based on reference signal measurement. The *X* encoders include the first encoder, and *X* is an integer greater than 1.

Correspondingly, the seventh communication module 2320 is further configured to send the multiple CSI feedback information sequentially to the network device, where the multiple CSI feedback information is used for the network device to determine, based on the encoder ID sequence, the second CSI feedback information corresponding to the first encoder.

In an implementation, the seventh communication module 2320 is further configured to receive first indication information from the network device, where the first indication information is used for indicating the CSI feedback performance.

In an implementation, the first indication information is used for indicating a third metric, and the third metric is used for characterizing the CSI feedback performance.

In an implementation, the first indication information is used for indicating whether the CSI feedback performance satisfies a preset condition.

In an implementation, the second processing module 2310 is further configured to determine that the CSI feedback performance does not satisfy the preset condition and perform predetermined processing on the first encoder, upon receiving second indication information from the network device.

In an implementation, the predetermined processing includes one of the following:
switching to use another encoder of *Z* encoders other than the first encoder, *Z* being an integer greater than 1;
updating the first encoder;
fine-tuning the first encoder; and
processing, based on a codebook, a fifth CSI obtained based on reference signal measurement.

In an implementation, the seventh communication module 2320 is further configured to send first report information to the network device upon receiving third indication information from the network device, where the third indication information is used for triggering CSI feedback performance evaluation, and the first report information is used for indicating at least one of the following:
whether to agree to evaluate the CSI feedback performance;
relevant information of the first encoder;
a first evaluation period;
a type of a fourth metric, the fourth metric being used for characterizing the CSI feedback performance; and
a first metric threshold.

In an implementation, the first report information is carried by an RRC, UCI, or a PUSCH.

In an implementation, the third indication information is carried by an RRC, a MAC CE, or DCI.

In an implementation, the seventh communication module 2320 is further configured to send second report information to the network device, where the second report information is used for triggering CSI feedback performance evaluation.

In an implementation, the second report information is used for indicating at least one of the following:
relevant information of the first encoder;
a second evaluation period;
a type of a fifth metric, the fifth metric being used for characterizing the CSI feedback performance; and
a second metric threshold.

In an implementation, the second report information is carried by an RRC, UCI, or a PUSCH.

In an implementation, the first encoder and the first decoder may be configured by the network device, and the seventh communication module 2320 is further configured to receive fourth indication information from the network device, where the fourth indication information is used for indicating relevant information of the first encoder.

The terminal device 2300 in the embodiment of the disclosure can implement the corresponding functions of the terminal device in the foregoing method embodiments. For the processes, functions, implementation manners, and beneficial effects corresponding to each module (sub-module, unit, or component, etc.) in the terminal device 2300, reference can be made to the corresponding descriptions in the above method embodiments, and details are not repeated herein. It should be noted that the functions described for each module (sub-module, unit, or component, etc.) in the terminal device 2300 of the embodiment of the disclosure can be implemented by different modules (sub-modules, units, or components, etc.) or by the same module (sub-module, unit, component, etc.).

FIG. 24 is a schematic block diagram of a communication device 2400 according to an embodiment of the disclosure. The communication device 2400 includes a processor 2410, and the processor 2410 can invoke and execute computer programs from a memory to cause the communication device 2400 to implement the method in the embodiments of the disclosure.

In an implementation, the communication device 2400 may further include a memory 2420. The processor 2410 can invoke and execute the computer program from the memory 2420 to cause the communication device 2400 to implement the method in the embodiments of the disclosure. The memory 2420 may be an independent component separate from the processor 2410, or may be integrated into the processor 2410.

In an implementation, the communication device 2400 may further include a transceiver 2430, and the processor 2410 can control the transceiver 2430 to communicate with other devices. Specifically, the communication device 2400 can send information or data to other device, or receive information or data sent by other device. The transceiver 2430 may include a transmitter and a receiver. The transceiver 2430 may further include one or more antennas.

In an implementation, the communication device 2400 may be the network device in the embodiments of the disclosure, and the communication device 2400 can implement the corresponding processes performed by the network device in each method in the embodiments of the disclosure, which will not be repeated herein for the sake of brevity.

In an implementation, the communication device 2400 may be the terminal device in the embodiments of the disclosure, and the communication device 2400 can implement the corresponding processes performed by the terminal device in each method in the embodiments of the disclosure, which will not be repeated herein for the sake of brevity.

FIG. 25 is a schematic structural diagram of a chip 2500 according to embodiments of the disclosure. The chip 2500 includes a processor 2510, and the processor 2510 can invoke and execute a computer program from a memory to implement the method in the embodiments of the disclosure.

In an implementation, the chip 2500 may further include a memory 2520. The processor 2510 can invoke and execute the computer program from the memory 2520 to implement the method performed by the terminal device in the embodiments of the disclosure. The memory 2520 may be an independent component separate from the processor 2510, or may be integrated into the processor 2510.

In an implementation, the chip 2500 may further include an input interface 2530. The processor 2510 can control the input interface 2530 to communicate with other devices or chips. Specifically, the input interface 2530 can obtain information or data sent by other devices or chips.

In an implementation, the chip 2500 may further include an output interface 2540. The processor 2510 can control the output interface 2540 to communicate with other devices or chips. Specifically, the output interface 2540 can output information or data to other devices or chips.

In an implementation, the chip can be applied to the network device in the embodiments of the disclosure, and the chip can implement the corresponding processes performed by the network device in each method in the embodiments of the disclosure, which will not be repeated herein for the sake of brevity.

In an implementation, the chip can be applied to the terminal device in the embodiments of the disclosure, and the chip can implement the corresponding processes performed by the terminal device in each method in the embodiments of the disclosure, which will not be repeated herein for the sake of brevity.

It should be understood that the chip in embodiments of the disclosure may also be referred to as a system-on-chip (SOC).

The processor described above may be a general-purpose processor, a digital signal processor (DSP), a field programmable gate array (FPGA), an application specific integrated circuit (ASIC), or other programmable logic devices, transistor logic devices or discrete hardware components, etc. The general purpose processor mentioned above may be a microprocessor, or the processor may be any conventional processor or the like.

The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory can be a random access memory (RAM).

It should be understood that, the memory above is intended for illustration rather than limitation. For example, the memory in embodiments of the disclosure may also be an static RAM (SRAM), a dynamic RAM (DRAM), an synchronous DRAM (SDRAM), a double data rate SDRAM (DDR SDRAM), an enhanced SDRAM (ESDRAM), a synch link DRAM (SLDRAM), a Direct Rambus RAM (DR RAM), etc. In other words, the memory in embodiments of the disclosure is intended to include, but is not limited to, these and any other suitable types of memory.

FIG. 26 illustrates a schematic block diagram of a communication system 2600 according to an embodiment of the disclosure. The communication system 2600 includes a network device 1600 and a terminal device 2300. The terminal device 2300 is configured for the network device 1600 to process a second CSI obtained based on reference signal measurement based on a first encoder to obtain second CSI feedback information, and send the second CSI feedback information to the network device 1600. The network device 1600 is configured to process a first CSI based on the first encoder to obtain first CSI feedback information, where the first CSI is obtained by the network device processing the received second CSI feedback information based on a first decoder, and the network device 1600 is further configured to evaluate CSI feedback performance based on the first CSI feedback information.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instructions can be stored in a computer-readable storage medium, or transmitted from one computer-readable storage medium to another computer-readable storage medium. For example, the computer instructions can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

It should also be understood that, in various method embodiments of the disclosure, the magnitude of a sequence number of each of the foregoing processes does not mean an execution order, and an execution order of each process should be determined according to a function and an internal logic of the process, which shall not constitute any limitation to an implementation process of embodiments of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be described in detail again herein.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A method for evaluating channel state information (CSI) feedback performance, comprising:
processing, by a network device, a first CSI based on a first encoder to obtain a first CSI feedback information, wherein the first CSI is obtained by the network device processing a second CSI feedback information from a terminal device based on a first decoder, the second CSI feedback information is obtained by the terminal device processing a second CSI based on the first encoder, and the second CSI is obtained based on reference signal measurement; and
evaluating, by the network device, CSI feedback performance based on the first CSI feedback information.

2. The method of claim 1, wherein evaluating, by the network device, the CSI feedback performance based on the first CSI feedback information comprises:
determining, by the network device, a first metric based on the first CSI feedback information and the second CSI feedback information, wherein the first metric is used for characterizing the CSI feedback performance.

3. The method of claim 2, wherein the first metric is related to a difference and/or a similarity between the first CSI feedback information and the second CSI feedback information.

4. The method of claim 2 or 3, wherein the first metric comprises at least one of:
a ratio of a number of error bits in *N* bits of the first CSI feedback information to *N,* wherein each of the error bits in the first CSI feedback information is a bit having a different value from a bit at the same bit position in the second CSI feedback information;
the number of error bits;
a mean square error between the first CSI feedback information and the second CSI feedback information;
a normalized mean square error between the first CSI feedback information and the second CSI feedback information;
a Euclidean distance between the first CSI feedback information and the second CSI feedback information;
a Hamming distance between the first CSI feedback information and the second CSI feedback information; and
a cosine similarity between the first CSI feedback information and the second CSI feedback information.

5. The method of any one of claims 1 to 4, wherein evaluating, by the network device, the CSI feedback performance based on the first CSI feedback information comprises:
processing, by the network device, the first CSI feedback information based on the first decoder to obtain a third CSI; and
determining, by the network device, a second metric based on the first CSI and the third CSI, wherein the second metric is used for characterizing the CSI feedback performance.

6. The method of any one of claims 1 to 5, wherein
the first decoder is an i-th decoder of *M* decoders, *M* being an integer greater than 1 and *i* being a positive integer not greater than *M,* and the first CSI feedback information is used for evaluating CSI feedback performance of the i-th decoder; and
the method further comprises:
determining, by the network device, a second decoder among the *M* decoders based on CSI feedback performance of each decoder of the *M* decoders, wherein the second decoder is used for the network device to process a third CSI feedback information from the terminal device.

7. The method of any one of claims 1 to 5, wherein
the first encoder is a *j*-th encoder of K encoders, K being an integer greater than 1 and *j* being a positive integer not greater than *K*;
the first CSI feedback information is used for evaluating CSI feedback performance of the *j*-th encoder;
CSI feedback performance of each encoder of the K encoders is used for determining a second encoder among the K encoders; and
the second encoder is used for the terminal device to process a fourth CSI obtained based on reference signal measurement.

8. The method of claim 7, wherein before processing, by the network device, the first CSI based on the first encoder to obtain the first CSI feedback information, the method further comprises:
sending, by the network device, first configuration information to the terminal device, wherein the first configuration information is used for indicating to the terminal device to process the second CSI based on the *j*-th encoder.

9. The method of claim 8, wherein
the first configuration information comprises an encoder identifier (ID) sequence, the encoder ID sequence comprises IDs of *X* encoders, the encoder ID sequence is used for indicating to the terminal device to process the second CSI sequentially based on the *X* encoders to obtain a plurality of CSI feedback information, and the plurality of CSI feedback information comprise a CSI feedback information corresponding to each encoder of the *X* encoders, wherein the *X* encoders comprise the *j*-th encoder, and *X* is an integer greater than 1; and
the method further comprises:
receiving, by the network device, the plurality of CSI feedback information from the terminal device, and determining the second CSI feedback information corresponding to the *j*-th encoder among the plurality of CSI feedback information based on the encoder ID sequence.

10. The method of any one of claims 1 to 5, wherein
the first encoder is a *j*-th encoder of *K* encoders, wherein *K* is an integer greater than 1 and *j* is a positive integer not greater than *K*;
the first decoder is a i-th decoder of *M* decoders, wherein *M* is an integer greater than 1 and *i* is a positive integer not greater than *M*;
the first CSI feedback information is used for evaluating CSI feedback performance of a combination of the *j*-th encoder and the i-th decoder; and
the method further comprises:
determining, by the network device, a second encoder and a second decoder based on CSI feedback performance of a combination of each encoder of the K encoders and each decoder of the *M* decoders, wherein the second decoder is used for the network device to process a third CSI feedback information from the terminal device; and the second encoder is used for the terminal device to process a fourth CSI obtained based on reference signal measurement.

11. The method of any one of claims 1 to 10, further comprising:
sending, by the network device, first indication information to the terminal device, wherein the first indication information is used for indicating the CSI feedback performance.

12. The method of claim 11, wherein the first indication information is used for indicating a third metric, and the third metric is used for characterizing the CSI feedback performance.

13. The method of claim 11 or 12, wherein the first indication information is used for indicating whether the CSI feedback performance satisfies a preset condition.

14. The method of any one of claims 1 to 13, further comprising:
sending, by the network device, second indication information to the terminal device based on a determination that the CSI feedback performance does not satisfy a preset condition, wherein the second indication information is used for indicating to the terminal device to perform a predetermined processing on the first encoder.

15. The method of claim 14, wherein the predetermined processing comprises one of:
switching to use another encoder of Z encoders of the terminal device other than the first encoder, Z being an integer greater than 1;
updating the first encoder;
fine-tuning the first encoder; and
processing, based on a codebook, a fifth CSI obtained based on reference signal measurement.

16. The method of any one of claims 1 to 15, further comprising:
maintaining, by the network device, to use the first encoder when the CSI feedback performance satisfies a preset condition.

17. The method of any one of claims 1 to 16, wherein before processing, by the network device, the first CSI based on the first encoder to obtain the first CSI feedback information, the method further comprises:
sending, by the network device, third indication information to the terminal device, wherein the third indication information is used for triggering CSI feedback performance evaluation.

18. The method of claim 17, further comprising:
receiving, by the network device, first report information from the terminal device, wherein the first report information is used for indicating at least one of:
whether to agree to evaluate CSI feedback performance;
relevant information of the first encoder;
a first evaluation period;
a type of a fourth metric, the fourth metric being used for characterizing the CSI feedback performance; and
a first metric threshold.

19. The method of claim 18, wherein the first report information is carried by a first radio resource control (RRC) message, uplink control information (UCI), or a physical uplink shared channel (PUSCH).

20. The method of any one of claims 17 to 19, wherein the third indication information is carried by a second RRC message, a medium access control control element (MAC CE), or downlink control information (DCI).

21. The method of any one of claims 1 to 16, wherein before processing, by the network device, the first CSI based on the encoder to obtain the first CSI feedback information, the method further comprises:
receiving, by the network device, second report information from the terminal device, wherein the second report information is used for triggering CSI feedback performance evaluation.

22. The method of claim 21, wherein the second report information is used for indicating at least one of:
relevant information of the first encoder;
a second evaluation period;
a type of a fifth metric, the fifth metric being used for characterizing the CSI feedback performance; and
a second metric threshold.

23. The method of claim 22, wherein the second report information is carried by an RRC message, UCI, or a PUSCH.

24. The method of any one of claims 1 to 23, wherein the first encoder and the first decoder are configured by the network device, and the method further comprises:
sending, by the network device, fourth indication information to the terminal device, wherein the fourth indication information is used for indicating relevant information of the first encoder.

25. The method of any one of claims 1 to 23, wherein the first decoder is pre-configured, and the first encoder is determined based on relevant information sent by the terminal device.

26. A method for evaluating channel state information (CSI) feedback performance, comprising:
processing, by a terminal device based on a first encoder, a second CSI obtained based on reference signal measurement to obtain a second CSI feedback information; and
sending, by the terminal device, the second CSI feedback information to a network device, wherein the second CSI feedback information is used for the network device to obtain a first CSI based on a first decoder and process the first CSI based on the first encoder to obtain the first CSI feedback information, so as to evaluate CSI feedback performance based on the first CSI feedback information.

27. The method of claim 26, wherein before processing, by the terminal device based on the first encoder, the second CSI obtained based on reference signal measurement to obtain the second CSI feedback information, the method further comprises:
receiving, by the terminal device, first configuration information from the network device; and
determining, by the terminal device, the first encoder among *K* encoders based on the first configuration information, wherein *K* is an integer greater than 1.

28. The method of claim 27, wherein
the first configuration information comprises an encoder identifier (ID) sequence, the encoder ID sequence comprises IDs of *X* encoders, the encoder ID sequence is used for indicating to the terminal device to process the measured second CSI sequentially based on the *X* encoders to obtain a plurality of CSI feedback information, the plurality of CSI feedback information comprise a CSI feedback information corresponding to each encoder of the *X* encoders, wherein the *X* encoders comprise the first encoder, *X* being an integer greater than 1; and
the method further comprises:
sending, by the terminal device, the plurality of CSI feedback information sequentially to the network device, wherein the plurality of CSI feedback information are used for the network device to determine the second CSI feedback information corresponding to the first encoder based on the encoder ID sequence.

29. The method of any one of claims 26 to 28, further comprising:
receiving, by the terminal device, first indication information from the network device, wherein the first indication information is used for indicating the CSI feedback performance.

30. The method of claim 29, wherein the first indication information is used for indicating a third metric, and the third metric is used for characterizing the CSI feedback performance.

31. The method of claim 29 or 30, wherein the first indication information is used for indicating whether the CSI feedback performance satisfies a preset condition.

32. The method of any one of claims 26 to 31, further comprising:
determining, by the terminal device, that the CSI feedback performance does not satisfy a preset condition and performing a predetermined processing on the first encoder, upon receiving second indication information from the network device.

33. The method of claim 32, wherein the predetermined processing comprises one of:
switching to use another encoder of Z encoders of the terminal device other than the first encoder, Z being an integer greater than 1;
updating the first encoder;
fine-tuning the first encoder; and
processing, based on a codebook, a fifth CSI obtained based on reference signal measurement.

34. The method of any one of claims 26 to 33, further comprising:
sending, by the terminal device, first report information to the network device upon receiving third indication information from the network device, wherein the third indication information is used for triggering CSI feedback performance evaluation, and the first report information is used for indicating at least one of:
whether to agree to evaluate the CSI feedback performance;
relevant information of the first encoder;
a first evaluation period;
a type of a fourth metric, the fourth metric being used for characterizing the CSI feedback performance; and
a first metric threshold.

35. The method of claim 34, wherein the first report information is carried by a first resource control (RRC) message, uplink control information (UCI), or a physical uplink shared channel (PUSCH).

36. The method of claim 34 or 35, wherein the third indication information is carried by a second RRC message, a medium access control control element (MAC CE), or downlink control information (DCI).

37. The method of any one of claims 26 to 33, further comprising:
sending, by the terminal device, second report information to the network device, wherein the second report information is used for triggering CSI feedback performance evaluation.

38. The method of claim 37, wherein the second report information is used for indicating at least one of:
relevant information of the first encoder;
a second evaluation period;
a type of a fifth metric, the fifth metric being used for characterizing the CSI feedback performance; and
a second metric threshold.

39. The method of claim 38, wherein the second report information is carried by an RRC message, UCI, or a PUSCH.

40. The method of any one of claims 26 to 39, wherein the first encoder and the first decoder are configured by the network device, and the method further comprises:
receiving, by the terminal device, fourth indication information from the network device, wherein the fourth indication information is used for indicating relevant information of the first encoder.

41. A network device, comprising:
a first processing module configured to process a first channel state information (CSI) based on a first encoder to obtain a first CSI feedback information, wherein the first CSI is obtained by processing, based on a first decoder, a second CSI feedback information from a terminal device, the second CSI feedback information is obtained by the terminal device processing a second CSI based on the first encoder, and the second CSI is obtained based on reference signal measurement, wherein
the first processing module is further configured to evaluate CSI feedback performance based on the first CSI feedback information.

42. The network device of claim 41, wherein the first processing module is further configured to:
determine a first metric based on the first CSI feedback information and the second CSI feedback information, the first metric being used for characterizing the CSI feedback performance.

43. The network device of claim 42, wherein the first metric is related to a difference and/or a similarity between the first CSI feedback information and the second CSI feedback information.

44. The network device of claim 42 or 43, wherein the first metric comprises at least one of:
a ratio of a number of error bits in *N* bits of the first CSI feedback information to *N,* wherein each of the error bits in the first CSI feedback information is a bit having a different value from a bit at the same bit position in the second CSI feedback information;
the number of error bits;
a mean square error between the first CSI feedback information and the second CSI feedback information;
a normalized mean square error between the first CSI feedback information and the second CSI feedback information;
a Euclidean distance between the first CSI feedback information and the second CSI feedback information;
a Hamming distance between the first CSI feedback information and the second CSI feedback information; and
a cosine similarity between the first CSI feedback information and the second CSI feedback information.

45. The network device of claim 41, wherein the first processing module is further configured to:
process the first CSI feedback information based on the first decoder to obtain a third CSI; and
determine a second metric based on the first CSI and the third CSI, the second metric being used for characterizing the CSI feedback performance.

46. The network device of any one of claims 41 to 45, wherein the first decoder is an i-th decoder of *M* decoders, *M* being an integer greater than 1 and i being a positive integer not greater than *M*, and the first CSI feedback information is used for evaluating CSI feedback performance of the i-th decoder; and
the first processing module is further configured to:
determine a second decoder among the *M* decoders based on CSI feedback performance of each decoder of the *M* decoders, wherein the second decoder is used for processing a third CSI feedback information from the terminal device.

47. The network device of any one of claims 41 to 45, wherein
the first encoder is a *j*-th encoder of *K* encoders, *K* being an integer greater than 1 and *j* being a positive integer not greater than *K*;
the first CSI feedback information is used for evaluating CSI feedback performance of the *j*-th encoder;
CSI feedback performance of each encoder of the *K* encoders is used for determining a second encoder among the *K* encoders; and
the second encoder is used for the terminal device to process a fourth CSI obtained based on reference signal measurement.

48. The network device of claim 47, further comprising a first communication module configured to:
send first configuration information to the terminal device, wherein the first configuration information is used for indicating to the terminal device to process the second CSI based on the *j*-th encoder.

49. The network device of claim 48, wherein the first configuration information comprises an encoder identifier (ID) sequence, the encoder ID sequence comprises IDs of *X* encoders, the encoder ID sequence is used for indicating to the terminal device to process the second CSI sequentially based on the *X* encoders to obtain a plurality of CSI feedback information, and the plurality of CSI feedback information comprise a CSI feedback information corresponding to each encoder of the *X* encoders, wherein the *X* encoders comprise the *j*-th encoder, and *X* is an integer greater than 1;
the first communication module is further configured to receive the plurality of CSI feedback information from the terminal device; and
the first processing module is further configured to determine the second CSI feedback information corresponding to the *j*-th encoder among the plurality of CSI feedback information based on the encoder ID sequence.

50. The network device of any one of claims 41 to 45, wherein the first encoder is a*j*-th encoder of *K* encoders, *K* being an integer greater than 1 and *j* being a positive integer not greater than *K*; the first decoder is an i-th decoder of *M* decoders, *M* being an integer greater than 1 and *i* being a positive integer not greater than *M*; the first CSI feedback information is used for evaluating CSI feedback performance of a combination of the *j*-th encoder and the i-th decoder; and
the first processing module is further configured to:
determine a second encoder and a second decoder based on CSI feedback performance of a combination of each encoder of the *K* encoders and each decoder of the *M* decoders, wherein the second decoder is used for processing a third CSI feedback information from the terminal device, and the second encoder is used for the terminal device to process a fourth CSI obtained based on reference signal measurement.

51. The network device of any one of claims 41 to 50, further comprising a second communication module configured to:
send first indication information to the terminal device, wherein the first indication information is used for indicating the CSI feedback performance.

52. The network device of claim 51, wherein the first indication information is used for indicating a third metric, the third metric being used for characterizing the CSI feedback performance.

53. The network device of claim 51 or 52, wherein the first indication information is used for indicating whether the CSI feedback performance satisfies a preset condition.

54. The network device of any one of claims 41 to 53, further comprising a third communication module configured to:
send second indication information to the terminal device based on a determination that the CSI feedback performance does not satisfy a preset condition, wherein the second indication information is used for indicating to the terminal device to perform a predetermined processing on the first encoder.

55. The network device of claim 54, wherein the predetermined processing comprises one of:
switching to use another encoder of Z encoders of the terminal device other than the first encoder, Z being an integer greater than 1;
updating the first encoder;
fine-tuning the first encoder; and
processing, based on a codebook, a fifth CSI obtained based on reference signal measurement.

56. The network device of any one of claims 41 to 55, wherein the first processing module is further configured to:
maintain to use the first encoder when the CSI feedback performance satisfies a preset condition.

57. The network device of any one of claims 41 to 56, further comprising a fourth communication module configured to:
send third indication information to the terminal device, wherein the third indication information is used for triggering CSI feedback performance evaluation.

58. The network device of claim 57, wherein the fourth communication module is further configured to:
receive first report information from the terminal device, wherein the first report information is used for indicating at least one of:
whether to agree to evaluate the CSI feedback performance;
relevant information of the first encoder;
a first evaluation period;
a type of a fourth metric, the fourth metric being used for characterizing the CSI feedback performance; and
a first metric threshold.

59. The network device of claim 58, wherein the first report information is carried by a first radio resource control (RRC) message, uplink control information (UCI), or a physical uplink shared channel (PUSCH).

60. The network device of any one of claims 57 to 59, wherein the third indication information is carried by a second RRC message, a medium access control control element (MAC CE), or downlink control information (DCI).

61. The network device of any one of claims 41 to 56, further comprising a fifth communication module configured to:
receive second report information from the terminal device, wherein the second report information is used for triggering CSI feedback performance evaluation.

62. The network device of claim 61, wherein the second report information is used for indicating at least one of:
relevant information of the first encoder;
a second evaluation period;
a type of a fifth metric, the fifth metric being used for characterizing the CSI feedback performance; and
a second metric threshold.

63. The network device of claim 62, wherein the second report information is carried by an RRC message, UCI, or a PUSCH.

64. The network device of any one of claims 41 to 63, wherein the first encoder and the first decoder are configured by the network device, and the network device further comprises a sixth communication module configured to:
send fourth indication information to the terminal device, wherein the fourth indication information is used for indicating relevant information of the first encoder.

65. The network device of any one of claims 41 to 63, wherein the first decoder is preconfigured, and the first encoder is determined based on relevant information sent by the terminal device.

66. A terminal device, comprising:
a second processing module configured to process, based on a first encoder, a second channel state information (CSI) obtained based on reference signal measurement to obtain a second CSI feedback information; and
a seventh communication module configured to send the second CSI feedback information to a network device, wherein the second CSI feedback information is used for the network device to obtain a first CSI based on a first decoder and evaluate CSI feedback performance based on the first CSI feedback information.

67. The terminal device of claim 66, wherein
the seventh communication module is further configured to receive first configuration information from the network device; and
the second processing module is further configured to determine the first encoder among *K* encoders based on the first configuration information, wherein *K* is an integer greater than 1.

68. The terminal device of claim 67, wherein the first configuration information comprises an encoder identifier (ID) sequence, the encoder ID sequence comprises IDs of *X* encoders, the encoder ID sequence is used for indicating to the terminal device to process the second CSI sequentially based on the *X* encoders, wherein the *X* encoders comprise the first encoder, *X* being an integer greater than 1; and
the seventh communication module is further configured to send the plurality of CSI feedback information sequentially to the network device, wherein the plurality of CSI feedback information are used for the network device to determine the second CSI feedback information corresponding to the first encoder based on the encoder ID sequence.

69. The terminal device of any one of claims 66 to 68, wherein the seventh communication module is further configured to:
receive first indication information from the network device, wherein the first indication information is used for indicating the CSI feedback performance.

70. The terminal device of claim 69, wherein the first indication information is used for indicating a third metric, and the third metric is used for characterizing the CSI feedback performance.

71. The terminal device of claim 69 or 70, wherein the first indication information is used for indicating whether the CSI feedback performance satisfies a preset condition.

72. The terminal device of any one of claims 66 to 71, wherein the second processing module is further configured to:
determine that the CSI feedback performance does not satisfy a preset condition and perform a predetermined processing on the first encoder, upon receiving second indication information from the network device.

73. The terminal device of claim 72, wherein the predetermined processing comprises one of:
switching to use another encoder of Z encoders other than the first encoder, Z being an integer greater than 1;
updating the first encoder;
fine-tuning the first encoder; and
processing, based on a codebook, a fifth CSI obtained based on reference signal measurement.

74. The terminal device of any one of claims 66 to 73, wherein the seventh communication module is further configured to:
send first report information to the network device upon receiving third indication information from the network device, wherein the third indication information is used for triggering CSI feedback performance evaluation, and the first report information is used for indicating at least one of:
whether to agree to evaluate the CSI feedback performance;
relevant information of the first encoder;
a first evaluation period;
a type of a fourth metric, the fourth metric being used for characterizing the CSI feedback performance; and
a first metric threshold.

75. The terminal device of claim 74, wherein the first report information is carried by a first resource control (RRC) message, uplink control information (UCI), or a physical uplink shared channel (PUSCH).

76. The terminal device of claim 74 or 75, wherein the third indication information is carried by a second RRC message, a medium access control control element (MAC CE), or downlink control information (DCI).

77. The terminal device of any one of claims 66 to 73, wherein the seventh communication module is further configured to:
send second report information to the network device, wherein the second report information is used for triggering CSI feedback performance evaluation.

78. The terminal device of claim 77, wherein the second report information is used for indicating at least one of:
relevant information of the first encoder;
a second evaluation period;
a type of a fifth metric, the fifth metric being used for characterizing the CSI feedback performance; and
a second metric threshold.

79. The terminal device of claim 78, wherein the second report information is carried by an RRC message, UCI, or a PUSCH.

80. The terminal device of any one of claims 66 to 79, wherein the first encoder and the first decoder are configured by the network device, and the seventh communication module is further configured to:
receive fourth indication information from the network device, wherein the fourth indication information is used for indicating relevant information of the first encoder.

81. A network device, comprising:
a memory configured to store computer programs; and
a processor configured to invoke and execute the computer programs stored in the memory, to cause the network device to perform the method of any one of claims 1 to 25.

82. A terminal device, comprising:
a memory configured to store computer programs; and
a processor configured to invoke and execute the computer programs stored in the memory, to cause the terminal device to perform the method of any one of claims 26 to 40.

83. A chip, comprising a processor configured to invoke and execute computer programs stored in a memory, to cause a device equipped with the chip to perform the method of any one of claims 1 to 40.

84. A computer-readable storage medium configured to store computer programs which, when run by a device, causes the device to perform the method of any one of claims 1 to 40.

85. A computer program product, comprising computer program instructions which cause a computer to perform the method according to any one of claims 1 to 40.

86. A computer program that causes a computer to perform the method of any one of claims 1 to 40.

87. A communication system, comprising:
a network device configured to perform the method according to any one of claims 1 to 25; and
a terminal device configured to perform the method according to any one of claims 26 to 40.
